(19) Europäisches Patentamt
European Patent Office
Office européen des brevets

(11) **EP 2 363 094 B1**

(12) **EUROPÄISCHE PATENTSCHRIFT**

(45) Veröffentlichungstag und Bekanntmachung des Hinweises auf die Patenterteilung:
**04.10.2017  Patentblatt 2017/40**

(51) Int Cl.:
***A61C 13/00*** *(2006.01)*

(21) Anmeldenummer: **11156445.6**

(22) Anmeldetag: **01.03.2011**

(54) **Verfahren, Vorrichtung und Computerprogramm zur Herstellung eines Zahnersatzes**

Method, device and computer program for producing a dental prosthesis

Procédé, dispositif et programme informatique pour la fabrication d'une prothèse dentaire

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2010  DE 102010002484**

(43) Veröffentlichungstag der Anmeldung:
**07.09.2011  Patentblatt 2011/36**

(73) Patentinhaber: **Schweiger, Josef**
**83346 Bergen (DE)**

(72) Erfinder: **Schweiger, Josef**
**83346 Bergen (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
EP-A1- 1 252 867       WO-A1-2010/010082
DE-A1-102005 052 838   DE-A1-102007 034 005
DE-B3-102006 033 794

**Beschreibung**

Die vorliegende Erfindung betrifft ein Verfahren zur Herstellung eines Zahnersatzes, mit einem Erzeugen des Zahnersatzes mit einem insbesondere einstückigen Kern und einer Außenschicht, insbesondere einer einstückigen Außenschicht, wobei der Kern und die Außenschicht zwischeneinander eine Grenzfläche definieren. Ferner betrifft die vorliegende Erfindung eine Vorrichtung zur Ausführung eines solchen Verfahrens und ein Computerprogramm mit Programmmitteln, die eine derartige Vorrichtung zur Durchführung eines solchen Verfahrens veranlassen, wenn das Computerprogramm auf der Vorrichtung ausgeführt wird.

EP 1 252 867 beschreibt ein Verfahren zur Herstellung eines künstlichen Zahnes, der eine Reproduktion des zu ersetzenden natürlichen Originalzahnes oder eines korrespondierenden natürlichen Zahnes ist. Es ist verständlicherweise wünschenswert, dass der als Reproduktion eines natürlichen Originalelementes herzustellende künstliche Zahn eine so naturgetreue Kopie wie möglich sein soll. Das natürliche Erscheinungsbild des natürlichen Originalelementes oder Zahnes soll daher so genau wie möglich kopiert werden. Das Aussehen sowohl des künstlichen Zahnes als auch des natürlichen Elements wird durch eine Anzahl von Eigenschaften gebildet, wie beispielsweise Farbe, Transluzenz, Helligkeit der Farben, Glanz, etc.

DE 10 2007 034 005 A1 beschreibt ein Verfahren zum Entwerfen von einem Zahnersatzteil, bei dem ein optischer Effekt mit einem computergestützten Verfahren entworfen wird. Weiterhin betrifft die Erfindung ein Verfahren zum Herstellen von einem Zahnersatzteil, bei dem mit einem computergesteuerten Verfahren ein Farbeffekt des Zahnersatzteils erzielt wird. Auch betrifft die Erfindung entsprechende Vorrichtungen sowie einen computerlesbaren Datenträger.

DE 10 2005 052 838 A1 beschreibt ein Verfahren zur Herstellung individuellen, mehrschichtig aufgebauten Zahnersatzes, wie beispielsweise herausnehmbarem Zahnersatz, Implantat-Suprastrukturen, Brücken, Kronen, Teilkronen, Onlays und Inlays. DOLLAR A Erfindungsgemäß wird die Aufgabe mit einem Verfahren zur Herstellung mehrschichtig aufgebauten Zahnersatzes dadurch gelöst, dass zunächst ein CAD-Datensatz des herzustellenden Zahnersatzes durch Digitalisierung der bereits präparierten Zähne und deren unmittelbaren Umgebung, in die der Zahnersatz eingefügt werden soll, erstellt wird, dass aus diesem CAD-Datensatz ein erster und ein zweiter CAD-Teildatensatz bestimmt wird, wobei der erste CAD-Teildatensatz die tragende Gerüststruktur des Zahnersatzes und der zweite CAD-Teildatensatz die ästhetisch und/oder funktionell relevante, überwiegend der Mundhöhle zugewandte Außengeometrie des Zahnersatzes repräsentiert, dass daran anschließend mittels des ersten CAD-Teildatensatzes die tragende Gerüststruktur hergestellt wird und dann die tragende Gerüststruktur zum mehrschichtig aufgebauten Zahnersatz durch Auftrag einer Funktionsschicht beispielsweise in Form einer Verblendkeramik oder eines der Schleimhaut zugewandten Polymers mittels des zweiten CAD-Teildatensatzes fertiggestellt wird.

DE 10 2006 033 794 beschreibt ein Elementesatz zur Verwendung bei der Herstellung einer dentalen Prothese, insbesondere einer Krone, einer Brücke, eines Inlays oder eines Onlays, umfassend: - ein Gerüst und - ein oder mehrere Modellteile zur Definition von Teilen der Außenkontur einer Verblendung für das Gerüst, wobei das bzw. die Modellteile auf das Gerüst so aufsetzbar sind, dass gleichzeitig (i) zwischen dem bzw. den Modellteilen und dem Gerüst ein Spalt verbleibt und (ii) das bzw. die Modellteile Teile der Außenkontur definieren. Beschrieben werden zudem entsprechende Verfahren und Systeme.

WO 2010/010082 A1 offenbart einen Formkörper aus formstabilisiertem Material, das mindestens einen ersten Bestandteil und einen zweiten Bestandteil aufweist, dadurch gekennzeichnet, dass der zweite Bestandteil eine andere Pigmentierung als der erste Bestandteil aufweist und der zweite Bestandteil in dem ersten Bestandteil, unter Ausbildung einer Grenzfläche so angeordnet ist, dass die Grenzfläche eine räumlich gekrümmte Fläche darstellt. WO 2010/010082 A1 offenbart auch ein Verfahren zur Herstellung des Formkörpers. In einer bevorzugten Ausführungsform der Offenbarung von WO 2010/010082 A1 erfolgt die Ausgestaltung einer Grenzlinie anhand von Erfahrungswerten sowie anhand von Untersuchungen der Schmelz-Dentin-Grenze bei natürlichen und/ oder künstlichen Zähnen.

Ein zweiteiliger Zahnersatz mit einem Gerüst aus beispielsweise Zirkondioxid und einer Verblendung aus beispielsweise silikatischer Keramik ist DE 10 2005 042 091 A1 beschrieben, wobei der Zahnersatz im CAD/CAM Verfahren aus zwei Einzelkomponenten hergestellt wird, die in einem Fügeschritt miteinander verbunden werden. In DE 10 2005 042 091 A1 findet sich kein Hinweis darauf, wie die damit entstehende Grenzfläche geometrisch vorbestimmt wird.

DE 103 12 848 A1 offenbart, ein Zahnersatzteil unter Verwendung eines Zahnmodells und/oder einer Zahndatenbank zu gestalten, wobei der interne Aufbau des Zahnmodells dem internen Aufbau eines idealen Zahns entspricht oder anhand einer vorab erstellten Aufnahme eines digitalen Abbilds des individuellen zu ersetzenden/ergänzenden Zahns bestimmt ist bzw. die Zahndatenbank Zahndaten real existierender Zähne in digitalisierter Form abbildet. In DE 103 12 848 A1 bleibt offen, welche Aspekte des internen Aufbaus eines Zahns angesprochen sind, insbesondere wird in DE 103 12 848 A1 nicht die Dentin-Schmelz-Grenze eines Zahns angesprochen.

DE 199 23 978 A1 offenbart ein Verfahren zur computergestützten patientenspezifischen Darstellung und Planung zahnärztlicher und/oder zahnprothetischer Arbeiten, wobei eine digitalisierte Datenbank einer Vielzahl von Modellzahnansichten eingesetzt wird. Auf die innere Struktur eines Zahnes oder eines Zahnersatzes wird hierbei nicht eingegangen.

In DE 102 52 298 B3 wird ein Verfahren zur Herstellung von Zahnersatzteilen oder Zahnrestaurationen unter Verwendung elektronischer Zahndarstellungen beschrieben. DE 102 52 298 B3 schlägt ein generisches Zahnmodell zur Modellierung der Außengeometrie eines Zahns bzw. Zahnersatzes vor, wobei bekannte Daten der (Rest-)Zahnsituation zur Anpassung des generischen Zahnmodells an den Einzelfall verwendet werden.

Im bisherigen Stand der Technik wird die innere Struktur eines natürlichen Zahns, insbesondere die innere Struktur desjenigen Zahns, für den ein zu erstellender Zahnersatz vorgesehen ist, für die Erstellung von Zahnersatz praktisch nicht berücksichtigt. Der innere Aufbau des zu erstellenden Zahnersatzes, insbesondere der Verlauf einer Grenzfläche zwischen einem Kern und einer Außenschicht des Zahnersatzes, wird ohne Betrachtung der natürlichen Zahnstruktur und ohne definierte Regeln dem Geschick und der Erfahrung etwa des Zahntechnikers überlassen, der die Erstellung des Zahnersatzes überwacht oder durchführt.

Eine der vorliegenden Erfindung zugrunde liegende Aufgabe ist es nun, ein eingangs erwähntes Verfahren, eine entsprechende Vorrichtung und ein entsprechendes Computerprogramm bereitzustellen, bei dem der damit erstellte Zahnersatz weitestgehend unabhängig von Geschick und Erfahrung des Benutzer die technischen, insbesondere mechanischen Anforderung an den Zahnersatz erfüllen kann und dabei in ästhetischer Hinsicht dem gewünschten Erscheinungsbild eines natürlichen Zahns möglichst nahekommt.

Erfindungsgemäß wird ein Aspekt der oben angesprochenen Aufgabe mit dem Vorschlag eines Verfahren zur Herstellung eines Zahnersatzes angegangen, wie es in Anspruch 1 definiert ist.

Erfindungsgemäß wird ein weiterer Aspekt der oben angesprochenen Aufgabe mit dem Vorschlag einer Vorrichtung zur Ausführung eines solchen Verfahrens, wie es in Anspruch 12 definiert ist, oder eines Verfahrens nach einem der abhängigen Ansprüche angegangen.

Ferner wird erfindungsgemäß ein weiterer Aspekt der oben angesprochenen Aufgabe mit dem Vorschlag eines Computerprogramm mit Programmmitteln angegangen, die eine erfindungsgemäße Vorrichtung zur Durchführung eines erfindungsgemäßen Verfahrens veranlassen, wenn das Computerprogramm auf der Vorrichtung ausgeführt wird.

Eine der Erkenntnisse, auf die die vorliegende Erfindung zurückgeht, besteht darin, das bei einer möglichst weitgehenden Reproduktion des natürlichen Verlaufs der Grenzfläche zwischen Dentinmaterial und Schmelzmaterial im natürlichen Zahn das Material des Kerns des Zahnersatzes gewissermaßen das Dentin des Zahns und das Material der Außenschicht des Zahnersatzes den Schmelz des Zahns im Bereich des Zahnersatzes ersetzt, womit sich auf einfache und reproduzierbare Weise ein dem natürlichen Zahn entsprechendes Erscheinungsbild erreichen lässt, ohne dass Merkmale wie Festigkeit, Elastizität oder Härte des restaurierten Zahns vernachlässigt werden müssten.

Ferner wurde erkannt, dass die Bestimmung der Dentin-Schmelz-Grenze bzw. deren Verlauf in geeigneter Weise, also ohne den Zahn bzw. Restzahn völlig zu zerstören, direkt an dem Zahn vorgenommen werden kann, für den der Zahnersatz vorgesehen ist, um so eine möglichst naturnahe Wiederherstellung zu erlauben. Eine solche Bestimmung des Verlaufs der Grenzfläche zwischen natürlichem Dentin und natürlichem Schmelz kann einerseits zu einem ausreichend frühen Zeitpunkt, also (lange) vor einem Schadensfall am Zahn, oder auch andererseits nach dem Schadensfall am zur Verfügung stehenden Restzahn erfolgen.

Zudem wurde aber auch erkannt, dass die vorliegende Erfindung nicht auf den Fall beschränkt ist, bei dem die Dentin-Schmelz-Grenze selbst aufgenommen werden kann. Es wurde gefunden, dass zur Bestimmung des Verlaufs der zu erstellenden Grenzfläche ebenso, d.h. ergänzend oder alternativ, auf die Außengeometrie bzw. zumindest einen etwa noch zur Verfügung stehenden Teil der Außengeometrie des Zahns zurückgegriffen werden kann. In Erkenntnis und unter Berücksichtigung der Prozesse, mit denen ein natürlicher Zahn gebildet wird, wurde gefunden, dass von der Außengeometrie eines Zahns auf die Geometrie der Grenze zwischen Schmelz und Dentin geschlossen werden kann.

Es ist zu beachten, dass mit der Erfindung keine Reproduktion der Grenzfläche zwischen natürlichem Dentin und natürlichem Schmelz des zu ersetzenden Zahns in etwa der Größenordnung einzelner Zellen oder gar noch feiner beabsichtigt ist, obgleich dies bei entsprechendem Aufwand möglich erscheint. In einer praktischen Realisierung wurde gefunden, dass die Genauigkeit im Bereich von 20 $\mu$m bis 100 $\mu$m, die sich mit den vorliegenden Techniken zur Erstellung von beispielsweise Keramik- oder Kunststoffkörpern erreicht werden kann, bereits sehr befriedigende Ergebnisse liefert, wobei auch eine geringere Auflösung oder Formtreue bis beispielsweise in den Bereich von 100 $\mu$m oder auch 200 $\mu$m als ausreichend erkannt wurde.

Es ist zwar bekannt, im Bereich von Dentalrestaurationen Datenbanken mit Zahndatensätzen zu nutzen. Die bisher bekannten Datenbanken beziehen sich allerdings lediglich auf eine teilweise oder auch komplette Außengeometrie der Zähne bzw. Zahnmodelle. Ein Aspekt der vorliegenden Erfindung geht dahin, bei der Herstellung einer inneren Zahnstruktur auf eine geeignete Datenbank zurückzugreifen, die unter anderem auf Grundlage einer Untersuchung bzw. Vermessung natürlicher Zähne entstanden ist. Der Zugriff auf innere Zahnstrukturen ist insbesondere für eine realitätsnahe Nachahmung von Frontzähnen, aber auch von Seitenzähnen, von besonderem Vorteil, wie von den Erfindern erkannt wurde. Der besondere Vorteil liegt darin begründet, dass durch einen mehrteiligen Schichtaufbau des Zahnersatzes, der sich an der Struktur eines natürlichen Zahns orientiert, eine ästhetisch ansprechende Zahnersatzkrone oder -brücke besonders gut erreicht werden kann.

Wurde bisher in herkömmlicher Weise eine Schichtung für den Aufbau eines Zahnersatzes vorgesehen, so wurden solche Schichtungen manuell durch den Zahntechniker ausgeführt. Der Zahntechniker bildet damit eine innere Struktur als Kern, auf welche dann eine Außenschicht mit transparenten Schneidemassen aufgetragen wird. Die sich damit ergebende Struktur des Zahnersatzes fußt allerdings ausschließlich auf dem durch Erfahrung gewonnenen Können und Empfinden des Zahntechnikers, und steht in keinem Zusammenhang mit der natürlichen inneren Struktur eines Zahns oder gar des Zahns, für den der Zahnersatz vorgesehen ist. Der Zahntechniker zielt darauf ab, mit dem letztlich fertiggestellten Zahnersatz dem Erscheinungsbild eines natürlichen Zahns, ohne den Willen oder die dafür notwendigen Informationen zu haben, den inneren Aufbau des Zahns nachzubilden.

Die vorliegende Erfindung erlaubt es, bei einem umfassenden Einsatz von computergestützten Fertigungssystemen Zahnkronen aus Glaskeramiken oder Zirkoniumdioxid im CAD/CAM-Verfahren herzustellen, ohne hierbei nur auf die Reproduktion lediglich der gewünschten Außenform beschränkt zu sein. Eine für den Frontzahnbereich gewünschte Ästhetik ist zu erreichen, da ein mit dem erfindungsgemäß hergestellten Zahnersatz versehene Zahn nicht nur in der Außengeometrie sondern auch in seiner inneren Struktur dem natürliche Zahn nahekommt.

Während bei herkömmlichen Verfahren, die einen Aufbau des Zahnersatzes mit Kern und Außenschicht vorsehen, die inneren Zahnstrukturen (die im Zahntechnikerjargon bisweilen "Dentinkerne" genannt wurden, ohne tatsächlich natürliche Dentinstrukturen nach- oder abzubilden) durch manuelle Herstellung durch den Zahntechniker, etwa durch Aufwachsen und digitales Kopieren oder durch Reduktion der anatomischen Außenform mittels Schleifkörper, hergestellt wurden und damit wesentlich auf dem Erfahrungsschatz des Zahntechnikers beruhten, erlaubt die vorliegenden Erfindung eine vollständig computergestützte Herstellung eines Zahnersatzes einschließlich von innerer Zahnstruktur, beispielsweise anhand von Daten aus einer Datenbank mit Informationen zu natürlichen Zähnen.

Im Rahmen des erfindungsgemäßen Verfahrens erfolgt die Aufnahme der Dentin-Schmelz-Grenze des Zahns mit Hilfe von Computertomographie, insbesondere Mikrocomputertomographie, Sonographie, Röntgenaufnahme, Nahbereichsfotogrammetrie und/oder Photographie.

Die genannten Verfahren erlauben vorteilhafterweise eine nicht-invasive und zerstörungsfreie Bestimmung der im Inneren des Zahns gelegenen und damit nicht direkt zugänglichen Grenzfläche zwischen Dentin und Schmelz, so dass eine derartige Bestimmung auch unabhängig vom Vorliegen einer Notwendigkeit für einen Zahnersatz, also bei noch unbeschädigtem Zahn, erfolgen kann. Beispielsweise kann die Aufnahme der Dentin-Schmelz-Grenze erfolgen, sobald der Zahn vollständig ausgebildet ist.

In einer Ausgestaltung des erfindungsgemäßen Verfahrens werden die mittelbar aufgenommenen Geometriedaten aus Geometriedaten der Restgebiß-Situation bestimmt.

Insbesondere wenn im Fall eines angegriffenen, beschädigten oder sogar ganz fehlenden Zahns keine vollständige oder ausreichende Bestimmung der originären Geometriedaten des ursprünglichen Zahns erfolgen kann, kann dennoch vorteilhafterweise die Geometrie des Restgebisses, also insbesondere benachbarter und/oder entsprechender Zähne, genutzt werden, um Rückschlüsse auf die Geometrie des zu ersetzenden Zahns vorzunehmen.

In einer weiteren Ausgestaltung des erfindungsgemäßen Verfahrens umfasst das Bestimmen des Verlaufs der Grenzfläche ein virtuelles Verformen der Modellaußengeometrie eines vorbestimmten Zahndatensatzes zur Anpassung an die Außengeometrie des Zahns, für den der Zahnersatz vorgesehen ist, und ein virtuelles Verformen einer Modellgrenzfläche des vorbestimmten Zahndatensatzes entsprechend der Verformung der Außengeometrie zur Bestimmung der Grenzfläche.

Es wurde gefunden, dass die Geometrie der Grenzfläche zwischen Dentin und Schmelz eines natürlichen Zahns und die Außengeometrie des natürlichen Zahns in ausreichender Weise korrelieren, um ausgehend von der Außengeometrie des zu ersetzenden Zahns über eine Anpassung eines Zahnmodells mit Daten zur Geometrie an die festgestellte Außengeometrie die Geometrie der zu erzeugenden Grenzfläche durch entsprechende Anpassung der Daten des Zahnmodells zur Dentin-Schmelz-Grenze bestimmen zu können.

In einer weiteren Ausgestaltung des erfindungsgemäßen Verfahrens umfasst das Bestimmen des Verlaufs der Grenzfläche ein Bestimmen einer Gruppe von Zahndatensätzen, wobei ein vorbestimmter Mittelwert der Modellaußengeometrie der Gruppe von Zahndatensätzen der Außengeometrie des Zahns entspricht, für den der Zahnersatz vorgesehen ist, und ein Bestimmen des Verlaufs der Grenzfläche mittels des vorbestimmten Mittelwerts von Modellgrenzflächen der Gruppe von Zahndatensätzen.

Alternativ oder ergänzend zu der oben angeführten Bestimmung der Grenzflächengeometrie des zu erstellenden Zahnersatzes durch eine anpassende "Verformung" von Modelldaten kann auch auf eine Kombination von mehreren Zahndatensätzen zurückgegriffen werden. Diese Kombination von mehreren Datensätzen ist dabei so bestimmt, dass das Ergebnis einer Anwendung eines Mittelungsalgorithmus auf die Außengeometriedaten der Zahndatensätze der mittelbar oder unmittelbar bestimmten Außengeometrie des zu ersetzenden Zahns (d.h. der Außengeometrie des zu ersetzenden Zahns im gesundem, originären Zustand bzw. der Außengeometrie der Kombination aus Restzahn mit erstelltem Zahnersatz im Idealfall) entspricht. Wird nun dieser Mittelungsalgorithmus entsprechend auch auf die mit den Zahndatensätzen vorgehaltenen Informationen zur Grenze zwischen Schmelz und Dentin angewandt, so ergibt sich

4

damit der gewünschte Verlauf der Grenzfläche für den zu erstellenden Zahnersatz.

In einer Ausführung dieser Ausgestaltung des erfindungsgemäßen Verfahrens wird der Mittelwert durch eine Mittelung der absoluten und/oder relativen Positionen von vorbestimmten Referenzpunkten bestimmt.

Mit der Wahl geeigneter Referenzpunkte, etwa in Form charakteristischer Punkte der Flächen, kann die Mittelwertbestimmung für eine Vielzahl von dreidimensionalen Flächen auf eine Mittelwertbestimmung einer Vielzahl von Positionswerten überführt werden, wobei charakteristische Eigenschaften des betreffenden Zahntyps beibehalten werden.

In einer weiteren Ausgestaltung des erfindungsgemäßen Verfahrens umfasst das Bestimmen des Verlaufs der Grenzfläche ein Bestimmen eines Zahndatensatzes, dessen Modellaußengeometrie ein vorbestimmtes Ähnlichkeitskriterium gegenüber der Außengeometrie des Zahns erfüllt, für den der Zahnersatz vorgesehen ist, und ein Bestimmen des Verlaufs der Grenzfläche auf Basis der Modellgrenzfläche des Zahndatensatzes.

Insbesondere wenn der Pool zur Verfügung stehenden Zahndatensätze groß ist, kann damit gerechnet werden, dass in der Vielzahl dieser Zahndatensätze mindestens ein Datensatz vorhanden ist, der einen Zahn bzw. ein Zahnmodell beschreibt, der äußerlich dem zu ersetzenden Zahn entspricht, so dass dessen Innengeometrie, also die Grenzfläche zwischen Dentin und Schmelz, die in diesem Datensatz erfasst ist, die Grenzfläche zwischen Kern und Außenschicht für den zu erstellenden Zahn angibt. Je größer die Zahl der zur Verfügung stehenden Zahndatensätze, desto größer wird dementsprechend auch die Wahrscheinlichkeit eines passenden Zahndatensatzes bzw. die Zahl der passenden Zahndatensätze, wobei der Begriff "passend" eine Ähnlichkeit zwischen dem natürlichen, zu ersetzenden Zahn (in seiner originären Form) und der Geometrie des Zahndatensatzes beschreibt, die ein vorbestimmtes Maß überschreitet. Verschiedene Ähnlichkeitsmaße sind dem Fachmann bekannt, die entsprechend den jeweiligen Gegebenheiten der Realisierung der vorliegenden Erfindung ausgewählt und/oder kombiniert werden können.

In einer weiteren Ausgestaltung des erfindungsgemäßen Verfahrens ist die Modellgrenzfläche wenigstens eines Zahndatensatzes auf Basis einer Aufnahme der Dentin-Schmelz-Grenze eines natürlichen Zahns mit Hilfe von Computertomographie, insbesondere Mikrocomputertomographie, Sonographie, Röntgenaufnahme, Nahbereichsfotogrammetrie und/oder Photographie und/oder einer Aufnahme der Außengeometrie des Dentins eines natürlichen Zahns nach Entfernung des Schmelzes bestimmt.

Auch wenn die Datensammlung der Zahngeometriedaten in der Datenbank der Zahndatensätze vollständig auf einer theoretischen Bestimmung auf Basis geeigneter Modelle basieren kann, ist mit einer Datensammlung auf Basis tatsächlicher Zähne, einschließlich einer Datensammlung, die nicht ausschließlich zerstörungsfrei ist, der Vorteil verbunden, dass unabhängig von eventuellen Defiziten einer theoretischen Modellierung die Erstellung von Zahnersatz gemäß der vorliegenden Ausgestaltung der Erfindung auf den Geometrien tatsächlicher Zähne basiert.

In einer spezielleren Ausgestaltung des erfindungsgemäßen Verfahrens erfolgt die Aufnahme der Dentin-Schmelz-Grenze mit Hilfe von Nahbereichsfotogrammetrie und/oder Photographie unter Verwendung von Licht, für das der Schmelz des Zahns durchlässig ist, insbesondere unter Verwendung von rotem oder längerwelligem Licht.

Es wurde im Zusammenhang mit der vorliegenden Erfindung gefunden, dass - auch wenn ein natürlicher Zahn für das menschliche Auge normalerweise derart undurchsichtig erscheint, dass innere Strukturen nicht erkannt werden können - mit der Wahl von Licht, das durch die äußere Schicht, also der Schmelz, des Zahns ausreichend ungehindert hindurchtreten kann, eine Aufnahme von inneren Strukturen in Form der Grenzfläche zwischen Dentin und Schmelz möglich ist.

In einer weiteren Ausgestaltung des erfindungsgemäßen Verfahrens werden das Material oder die Materialien für Kern und Außenschicht derart gewählt und/oder wird das Erzeugen von Kern und Außenschicht derart ausgeführt, dass die Transluzenz der Außenschicht höher ist als die des Kerns. Bevorzugt entsprechen die Materialien in ihrer Transluzenz den natürlichen Materialen Dentin und Schmelz in absoluten Werten oder in ihrem relativen Verhältnis. Dabei liegt die mittlere Lichtdurchlässigkeit (direct transmission coefficient (tc) [%]) im Wellenlängenbereich von 400 bis 700 nm bei einer 1 mm dicken Probe (gemessen mit einem Spektralphotometer DU-7 (Beckman), nach einem Polieren mit 3 $\mu$m Diamanten zur Beseitigung von Kratzern) für den Kern vorzugsweise im Bereich von 20 bis 65%, besonders bevorzugt im Bereich von 40 bis 60%. Für die Außenschicht als Verblendschicht wird dagegen eine Transluzenz im Bereich von 65 bis 95% bevorzugt, insbesondere im Bereich von 67,5 bis 85%. In "Composite Resin Restorations - Natural Asthetics and Dynamics of Light" von S. Duarte et al. (Pract. Proced. Aesthet. Dent. 2003, 15(9); A-H) wird angegeben, dass Enamel (als Material der natürlichen Schmelzschicht) eine Lichtdurchlässigkeit/Transluzenz von 70,1% und Dentin von 52,6% habe.

Bei einer Einstellung der Transluzenz der Außenschicht derart, dass sie über die Transluzenz des Kern hinausgeht, kann das ästhetische Empfinden des Zahnersatzes in einfacher Weise an das eines natürlichen Zahns (insbesondere das der benachbarten Zähne) angepasst werden.

In einer weiteren Ausgestaltung des erfindungsgemäßen Verfahrens weist der Kern ein oxidkeramisches Material, ein silikatkeramisches Material und/oder ein Kunststoffmaterial auf oder besteht daraus und/oder weist die Außenschicht ein oxidkeramisches Material, ein silikatkeramisches Material und/oder ein Kunststoffmaterial auf oder besteht daraus. Hierbei wird entsprechend dem vorstehenden für die Außenschicht transluzentes silikatkeramisches, insbesondere transluzentes glaskeramisches Material besonders bevorzugt.

Zu den Silikatkeramiken werden im vorliegenden Zusammenhang insbesondere gezählt: Glaskeramiken, leuzitverstärkte Glaskeramiken, Feldspatkeramiken, leuzitverstärkte Feldspatkeramiken, Lithiumdisilikatkeramiken und Fluoro-Apatit-Keramiken.

Die genannten Materialien sind im Dentalbereich bereits in der Praxis eingesetzt worden, so dass hier für den hier einschlägigen Fachmann entsprechende Erfahrungen in Umgang und Einsatz vorliegen, auf die vorteilhafterweise bei der Realisierung der vorliegenden Erfindung zurückgegriffen werden kann.

Zu beachten ist, dass die Härte der Außenschicht von Bedeutung für die Funktionsweise der Restauration ist. Sie sollte nicht zu hoch sein, da sonst der Gegenzahn übermäßig abradiert würde. Sie sollte auch nicht zu niedrig sein, da sonst die Verblendung abgeschliffen würde.

Der Kern der vorliegenden Erfindung findet in einer herkömmlichen Restauration seine Entsprechung in der Kombination aus Gerüst und der sogenannten "Dentinschicht". Es wird bevorzugt, dass der Kern der vorliegenden Erfindung eine Festigkeit aufweist, die der Festigkeit des herkömmlichen Gerüstes entspricht oder darüber liegt. Bevorzugt wird vorliegend für Einzelversorgungen eine Mindestfestigkeit von 100 MPa, bei dreigliedrigen Brücken von 300 MPa im Fronzahnbereich und von 500 MPa im Seitenzahnbereich (Werte gemäß Norm).

Bei der Wahl der Materialien und Eigenschaften für den Kern und die Außenschicht sollte bevorzugt für den Fall, dass keramische Werkstoffe eingesetzt werden, welche mittels eines keramischen Brandes im Ofen zusammenfügt werden, der Wärmeausdehnungskoeffizient (WAK) berücksichtigt werden, der eine wesentliche Rolle für das Funktionieren der Versorgung (d.h. des Zahnersatzes) spielen kann. Kommt die Verblendkeramik (d.h. die Außenschicht) in der Abkühlphase unter Druckspannung, erhöht dies die Stabilität der Verblendung. Eine Zugspannung in der Verblendkeramik kann zu Sprüngen und Abplatzungen führen, also zu einem Misserfolg. Der WAK der Verblendung liegt deshalb vorzugsweise niedriger als der des inneren Kernes.

Bei der Wahl des Materials und der entsprechenden Herstellung kann und sollte bevorzugt auch die Abrasionsstabilität der Außenschicht, bzw. die Abrasivität des Materials berücksichtigt werden. Die Auswahl des Materials für die Außenschicht wird bevorzugt dahingehend getroffen, dass seine Abrasionswerte weitgehend an die Abrasionswerte des natürlichen Zahnschmelzes angenähert sind, sodass die Zähne im Gegenkiefer beim Kauvorgang nicht übermäßig abgeschliffen werden.

Im Folgenden wird die Erfindung unter Bezug auf die beiliegenden Figuren näher erläutert:

Fig. 1    zeigt ein vertikales Schnittbild eines natürlichen oberen mittleren Schneidzahnes.

Fig. 2    zeigt ein vertikales Schnittbild eines Zahnersatzteiles (Krone) auf einem oberen mittleren Schneidezahn, das gemäß einer Ausführungsform der Erfindung hergestellt wurde.

Fig. 3    zeigt ein vertikales Schnittbild eines Zahnersatzteiles (Krone) auf einem oberen mittleren Schneidezahn, das gemäß einer anderen Ausführungsform der Erfindung hergestellt wurde.

Fig. 4    skizziert eine frontale Ansicht eines natürlichen oberen mittleren Schneidezahns mit dargestelltem inneren Dentinkern.

Fig. 5    illustriert eine dynamisch proportionale Veränderung einer inneren schichtweisen Zahnstruktur (Dentinkern) entsprechend einer Veränderung der Außengeometrie.

Fig. 6    illustriert eine dynamisch nicht-proportionale Veränderung einer inneren schichtweisen Zahnstruktur (Dentinkern) entsprechend einer Veränderung der Außengeometrie.

Fig. 7    illustriert eine statische Nicht-Veränderung einer inneren schichtweisen Zahnstruktur (Dentinkern) bei einer Veränderung der Außengeometrie.

Fig. 8    illustriert das biogenerische Korrelationsprinzip zwischen äußeren Zahnoberfläche- und Zahnformmerkmalen und dem schichtweisen inneren Aufbau, insbesondere dem Dentinkern.

Fig. 9    illustriert lichtoptisches Verhalten an Schichten eines oberen mittleren Schneidezahns.

Fig. 10    zeigt schematisch Verfahrensschritte einer Ausführungsform des erfindungsgemäßen Verfahrens.

Fig. 11    zeigt schematisch einen Verfahrensablauf einer Ausführungsform des erfindungsgemäßen Verfahrens.

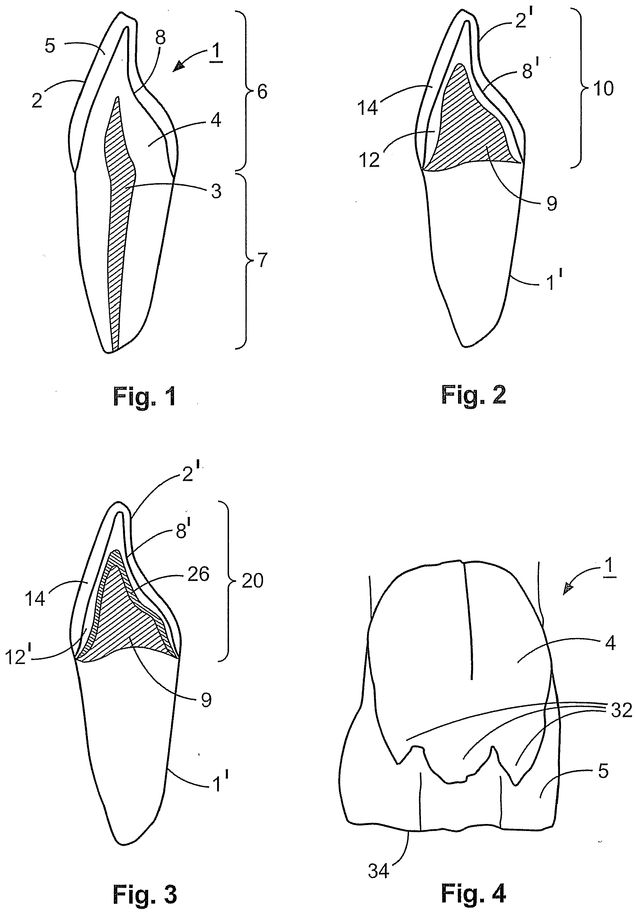

Fig. 1 zeigt ein vertikales Schnittbild eines natürlichen oberen mittleren Schneidzahnes 1 mit der äußeren Oberfläche 2 und dem schichtweisen inneren Aufbau. Die Darstellung des Zahns 1 umfasst schematisch Zahnpulpa 3, Dentin 4 und Schmelzbereich 5 (auch Inzisalschale genannt). Grundsätzlich kann der Gesamtzahn 1 auch in einen Bereich der natürlichen Zahnkrone 6 und einen Bereich der natürlichen Zahnwurzel 7 unterteilt werden. In Fig. 1 ist unter anderem auch der natürliche Verlauf der Grenzfläche 8 zwischen Dentin 4 und Schmelz 5 zu erkennen.

Fig. 2 zeigt ein vertikales Schnittbild eines Zahnersatzteiles (Krone) auf einem oberen mittleren Schneidezahn, das gemäß einer Ausführungsform der Erfindung hergestellt wurde. Das Zahnersatzteil 10, hier eine künstliche Krone, ist auf einem beschliffenen Zahnstumpf 9 eines oberen mittleren Schneidezahn 1' als Restzahn angeordnet, wobei das Zahnersatzteil 10 einen keramischen Kern 12 und eine keramische Außenschicht 14 umfasst. Die Grenzfläche 8' zwischen Kern 12 und Außenschicht 14 entspricht in ihrem Verlauf der Grenzfläche 8 aus Fig. 1. Auch die Außenfläche 2' der Außenschicht 14 entspricht in ihrem Verlauf der Außenfläche 2 aus Fig. 1. Bei dem in Fig. 2 dargestellten Zahnersatz ist keine zusätzliche Verstärkung des Kerns 14 in Form eines hochfesten Gerüstes vorgesehen. Bei ausreichender Festigkeit von Kern 14 und/oder Außenschicht 12 kann auf ein derartiges Gerüst verzichtet werden. Die Herstellung des Kerns 12, dessen Außenform 8' (also die Grenzfläche zwischen Kern 12 und Außenschicht 14) im Bereich des Zahnersatzes 10 der des Dentinkerns 4 aus Fig. 1 entspricht, erfolgt auf der Basis eines Datensatzes aus einer Zahnstrukturdatenbank mittels computergestützter Verfahren (insbesondere CAD/CAM und Generative Verfahren). Die Herstellung der Außenschicht 14 erfolgt entweder manuell durch Aufschichten oder Überpressen. Die Herstellung der Inzisalschale 14 kann auch auf der Basis eines Datensatzes der Zahnstrukturdatenbank mittels computergestützter Verfahren (insbesondere CAD/CAM und Generativer Verfahren) erfolgen. Künstliche Zahnkrone 10 und natürliche Zahnwurzel 9 bilden eine Gesamtstruktur.

Auch wenn Fig. 2 einen Fall zeigt, bei dem eine Krone auf einen Restzahn aufgesetzt ist, so ist die vorliegende Erfindung nicht derartige Konstellationen beschränkt. Insbesondere kann die Erfindung auch bei einer Krone auf einem Implantat realisiert werden, bei der dann vorzugsweise die herkömmlichen Bestandteile Abutment und Gerüst bevorzugt in Form des erfindungsgemäßen Kerns dargestellt werden. Ferner ist die Erfindung auch nicht darauf beschränkt, dass der Kern von der Außenschicht (vollständig) umschlossen wird. Insofern betrifft die vorliegende Erfindung auch andere Möglichkeiten, wie etwa die Erstellung eines Zahnersatzes, bei dem nur der vordere Teil des Zahns ersetzt wird.

Fig. 3 zeigt ein vertikales Schnittbild eines Zahnersatzteiles (Krone) auf einem oberen mittleren Schneidezahn, das gemäß einer anderen Ausführungsform der Erfindung hergestellt wurde. Das Zahnersatzteil 20, hier, wie in Fig. 2, eine künstliche Krone, ist auf einem beschliffenen Zahnstumpf 9 eines oberen mittleren Schneidezahn 1' angeordnet. Das Zahnersatzteil 20 umfasst einen Kern mit einer hochfesten Gerüststruktur 26 und einer darauf aufgebrachten Keramikschicht 12' sowie eine Außenschicht 14, die wiederum auf der Keramikschicht 12' angeordnet ist, so dass die Außenschicht 14 und die Keramikschicht 12' eine Grenzfläche 8' bilden. Die Außenschicht 14 ist aus keramischer Schneide- oder Transpamasse als Inzisalschale gebildet. Ähnlich der Herstellung des Zahnersatzes, des in Fig. 2 gezeigt ist, erfolgt die Herstellung der Keramikschicht 12' des Kerns auf Basis eines Datensatzes aus einer Zahnstrukturdatenbank mittels computergestützter Verfahren (insbesondere CAD/CAM und Generative Verfahren), wobei ebenso für die Herstellung der Außenschicht 14 beispielweise ein Herstellung manuell durch Aufschichten oder durch Überpressen vorgesehen ist. Die Herstellung Außenschicht 14 kann zudem auf der Basis eines Datensatzes der Zahnstrukturdatenbank mittels computergestützter Verfahren (insbesondere CAD/CAM und Generative Verfahren) erfolgen. Auch hier bilden die künstliche Zahnkrone 20 und natürliche Zahnwurzel 9 eine Gesamtstruktur.

Fig. 4 skizziert eine frontale Ansicht eines natürlichen oberen mittleren Schneidezahns 1 mit dargestelltem inneren Dentinkern 4 und illustriert seinem strukturierten inneren schichtweisen Aufbau, wobei die Ausbildung der unregelmäßigen Strukturen des Dentinkernes in Richtung Inzisalkante 34 gut erkennbar sind (sogenannte Mamelons 32), sowie die unregelmäßige Ausbildung der Inzisalkante 34 selbst.

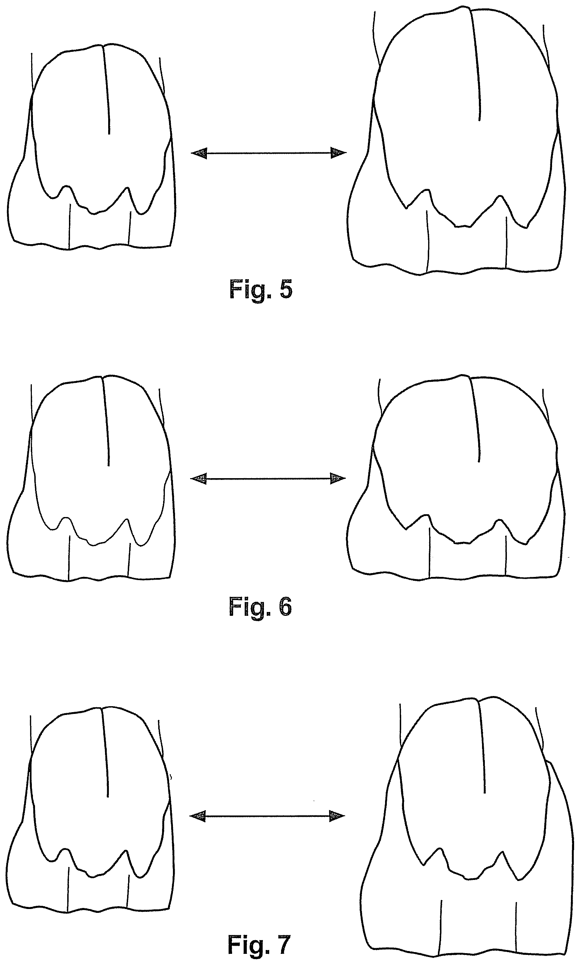

Fig. 5 illustriert eine dynamisch proportionale Veränderung einer inneren schichtweisen Zahnstruktur (Dentinkern) entsprechend einer Veränderung der Außengeometrie. Bei der Darstellung in Fig. 5 (ebenso wie der in den folgenden Fig. 6 bis 8) handelt es sich um eine Visualisierung von geometrischen Daten in einem Zahndatensatz und deren Manipulation bzw. Modifikation. Die einzelnen Elemente, die in Fig. 5 dargestellt sind, entsprechen der Darstellung aus Fig. 4, so dass auf eine weitere Erläuterung und eine Wiederholung der Bezugszeichen verzichtet werden kann. Fig. 5 zeigt, wie der im linken Bereich visualisierte Datensatz durch proportionale Skalierung in einen Datensatz überführt wird, der einen größeren Zahn darstellt. Die relativen Größenverhältnisse der einzelnen Zahnelemente bleiben dabei allerdings bestehen. Ebenso kann ein Datensatz auch in einen Datensatz überführt werden, der für einen kleineren Zahn steht.

Fig. 6 illustriert eine dynamisch nicht-proportionale Veränderung einer inneren schichtweisen Zahnstruktur (Dentinkern) entsprechend einer Veränderung der Außengeometrie. Bei der Überführung, die in Fig. 6 dargestellt ist, erfolgt keine in allen Dimensionen gleichmäßig Streckung bzw. Stauchung. Hierbei ist die Skalierung nicht proportional, so dass teilweise Größenverhältnisse (hier Höhe zu Breite) verändert werden.

Fig. 7 illustriert eine statische Nicht-Veränderung einer inneren schichtweisen Zahnstruktur (Dentinkern) bei einer Veränderung der Außengeometrie. Bei dem in Fig. 7 gezeigten Übergang verbleibt die Dentinstruktur in ihrer Größe und Form unverändert, während die Außengeometrie insgesamt ihre Größe ändert.

Die Erfindung ist nicht auf die in den Fig. 5 bis 7 gezeigten Modifikationen beschränkt. Insbesondere sind auch andere Veränderungen an den Datensätzen möglich, was auch Kombinationen der Skalierungen aus Fig. 5 bis 7 miteinander oder mit anderen Veränderungen an den Datensätzen einschließt.

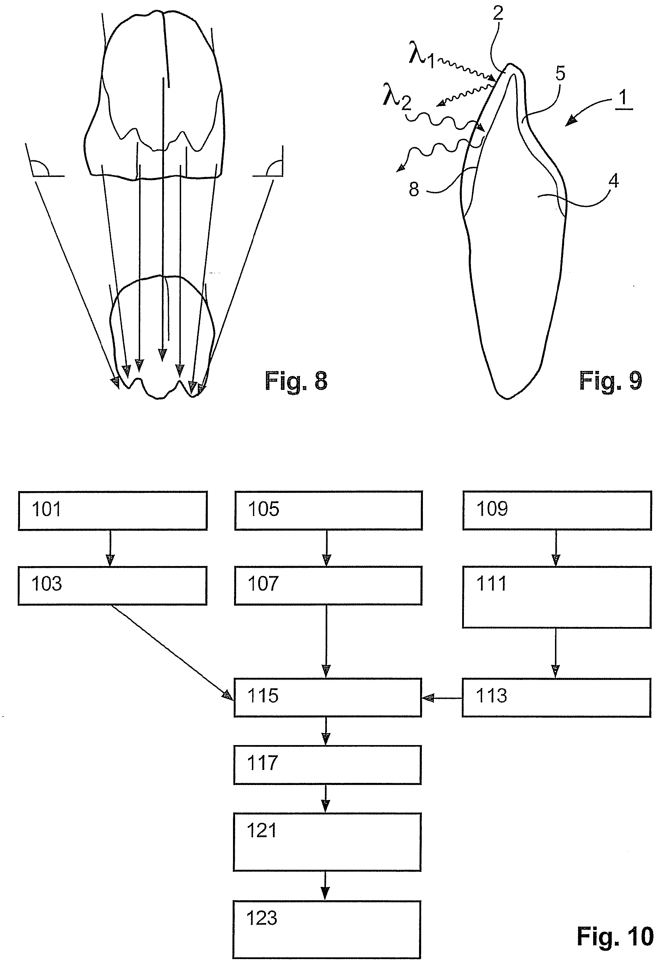

Fig. 8 illustriert das biogenerische Korrelationsprinzip zwischen äußeren Zahnoberfläche- und Zahnformmerkmalen und dem schichtweisen inneren Aufbau, insbesondere dem Dentinkern. Dabei determinieren eine reduzierte Anzahl von spezifischen Punkten auf der äußeren Zahnoberfläche und/oder spezifische Zahnform- und Zahnoberflächenmerkmale (z.B. mesiale und distale Winkel der Ecken der Inzisalkanten, Krümmungsradien der Labialfläche usw.) eine definierte Geometrie der inneren Zahnstrukturen, insbesondere des Dentinkernes. Die in Fig. 8 angedeuteten Winkel symbolisieren die Ausprägung der Rundung von mesialer und distaler Kante eines Frontzahnes. Oft ist die mesiale Kante eines Schneidezahnes weniger gerundet als die distale Kante. Der so gebildete Winkel erscheint dann mesial mit ca. 90°, während die distale Kante eines Schneidzahnes eine größere Rundung aufweist, also der Winkel größer als 90° ist. In der Fachsprache wird dieses Merkmal "Winkelmerkmal" genannt. Die Pfeile illustrieren den Zusammenhang und die Abhängigkeit zwischen den Merkmalen der Außenfläche zu den Merkmalen der Innenfläche.

Fig. 9 illustriert lichtoptisches Verhalten an Schichten eines oberen mittleren Schneidezahns. Fig. 9 zeigt das unterschiedliche lichtoptische Verhalten von Schneidebereich 5 und Dentinkern 4 am Beispiel eines Schnittbildes durch einen oberen mittleren Schneidezahn 1. Die Darstellung von Fig. 9 entspricht der von Fig. 1 unter Auslassung der Pulpa 3. Durch die Verwendung verschiedener Wellenlängen können neben der Zahnoberfläche 2 auch die tieferliegenden inneren schichtweisen Zahnstrukturen (insbesondere die Grenzfläche zwischen Dentinkern 4 und Schmelz 5) durch 3D-Erfassunggeräte dreidimensional digital aufgezeichnet werden, insbesondere bei Verwendung von langweiligem Licht, z.B. Infrarotlicht oder Infrarotlaserlicht. Die Funktionsweise von 3D-Erfassungsgeräten ist im Grundsatz bekannt. Bekannte Vorrichtungen arbeiten beispielsweise auf der Basis von Streifenlichttriangulation, Laserlichttriangulation oder Videosignal. Die Wellenlänge $\lambda_1$ ist kleiner als die Wellenlänge $\lambda_2$, Die Wellenlänge $\lambda_1$ steht beispielsweise für kurzwelliges blaues Licht, das am Zahnschmelz 5, d.h. an der Außenfläche 2 des Zahns 1, reflektiert wird, während $\lambda_2$ für z.B. längerwelliges rotes Licht oder Infrarotlicht steht, das den Schmelzbereich 5 durchdringt und erst der Grenzfläche zwischen Dentin 4 und Schmelz 5 reflektiert wird. Auf dieses Weise kann gewissermaßen in den Zahn hineingeblickt werden.

Fig. 10 zeigt schematisch Verfahrensschritte einer Ausführungsform des erfindungsgemäßen Verfahrens in drei Alternativen. Gezeigt wird schematisch ein grundsätzlicher Workflow zur Anwendung einer Datenbank mit Datensätzen der äußeren Zahnoberfläche und Datensätzen des inneren schichtweisen Aufbaus sowie der dynamischen Korrelation. Es werden dabei beispielhaft drei Möglichkeiten bei der Anwendung der Datenbank mit dynamischer bzw. statischer Korrelation unterschieden.

In einem ersten Fall ist ein Spiegelbild des fehlenden Zahnes vorhanden und wird als Datensatz aufgenommen (Schritt 101). Dieser Datensatz wird achsensymmetrisch um die vertikale Zahnachse gespiegelt (Schritt 103) und anschließend der in seiner Zahnaußenfläche ähnlichste Datensatz aus der Datenbank ausgewählt (Schritt 115), beispielsweise mit Hilfe der "Best-Fit-Alignment"-Methode. Da in der Zahndatenbank zu jeder als Datensatz aufgenommenen Zahnaußenfläche eine Korrelation (dynamisch und statisch) zu Daten des inneren, schichtweisen Zahnaufbaus besteht, können die Daten der inneren, schichtweisen Zahnstrukturen aufgerufen werden, insbesondere Daten zu Dentinkern und Inzisalschale bzw. zur Grenzfläche zwischen Dentinkern und Inzisalschale (Schritt 117). Diese Daten werden dann über computergestützte Fertigungsgeräte (insbesondere CAD/CAM, Generative Verfahren) zur Herstellung der Bestandteile des zu erstellenden Zahnersatzes genutzt (Schritt 121). Die abschließende Fertigstellung des Zahnersatzteiles erfolgt anschließend entweder durch manuelles Aufschichten (insbesondere Keramik und Kunststoff), durch Auf- und Überpressen oder durch Verbinden der einzelnen computergefertigten Schichten durch Verkleben oder Sinterverbundbrand (Schritt 123).

Bei einer zweiten Möglichkeit wird festgestellt, dass kein Spiegelbild des fehlenden Zahnes vorliegt (Schritt 105), wobei der Benutzer dann, etwa nach subjektiven Kriterien, den in seiner äußeren Zahnstruktur geeignetsten Datensatz aus der Datenbank aus (Schritt 107). Dieser Datensatz der äußeren Zahnstruktur wird dann wie oben beschrieben für den weiteren Verarbeitungsprozess verwendet (Schritte 115, 117, 121, 123).

Bei einer dritten Möglichkeit wird ebenfalls kein Spiegelbild des fehlenden Zahnes vorgefunden (Schritt 109). Aus der Datenbank wird der in seiner Zahnaußenfläche ähnlichste Datensatz eines Nachbarzahnes oder eines Kieferteilabschnittes (z.B. Oberkieferfront) aus der Datenbank ausgewählt (Schritt 111), beispielsweise mit Hilfe der "Best-Fit-Alignment"-Methode. Der Datensatz des Kieferteilabschnittes besteht aus den einzelnen Datensätzen der Zahnaußenstrukturen der in diesem Kieferteilabschnitt enthaltenen Zahntypen (z.B. Oberkieferfrontabschnitt 1-er bis 3-er, Unterkieferfrontabschnitt 1-er bis 3-er, Seitenzahnkieferabschnitt 4-er bis 8-er). Dem in seiner Zahnaußenfläche passendsten Nachbarzahn kann aufgrund der Korrelation innerhalb des Datensatzes des Kieferteilabschnittes der geeignetste Datensatz der Zahnaußenstruktur des fehlenden Zahnes zugeordnet werden (Schritt 113). Dieser Datensatz wird dann wie oben beschrieben für den weiteren Verarbeitungsprozess verwendet (Schritte 115, 117, 121, 123).

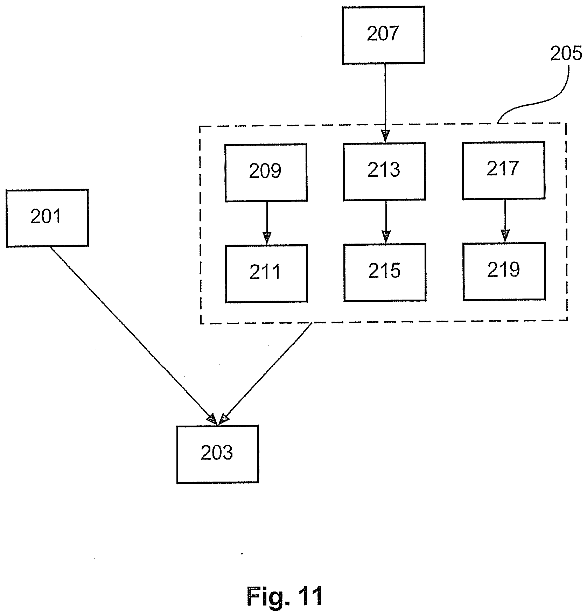

Fig. 11 zeigt schematisch einen Verfahrensablauf einer Ausführungsform des erfindungsgemäßen Verfahrens, wobei - wie auch schon bei Fig. 10 - erfindungsgemäß nicht alle Verfahrensschritte durchlaufen werden müssen, sofern Alternativen vorliegen.

In Schritt 201 wird auf Basis einer Aufnahme der Dentin-Schmelz-Grenze des Zahns, für den der Zahnersatz, der zu erstellen ist, der Verlauf der Grenzfläche zwischen dem Kern und der Außenschicht des Zahnersatzes festgelegt, wobei die Daten der Grenzfläche dann in Schritt 203 für die Erzeugung, d.h. Fertigung, des Zahnersatzes genutzt werden.

Eine Alternative oder Ergänzung dazu besteht darin, wie mit Schritt 205 angedeutet, auf die Außengeometrie des zu ersetzenden Zahns zurückzugreifen, wobei die Geometriedaten unmittelbar (etwa durch direktes Messen oder Scannen) oder mittelbar (etwa durch Aufnahme der Geometriedaten des Restgebisses, insbesondere des Gegenzahns und/oder von Nachbarzähnen und/oder spiegelbildlichen Gegenstücken im Gebiss) aufgenommen werden. Die Daten werden hier in Schritt 207 aus Geometriedaten der aktuellen (oder zu einem früheren Zeitpunkt aufgenommenen) Situation im Mundraum des Patienten bestimmt, wenn die Daten des zu ersetzenden Zahns nicht ausreichen oder gar nicht zur Verfügung stehen.

Schritt 205 umfasst in der Darstellung von Fig. 11 drei Alternativen, die auch miteinander verknüpft werden können, um eine weitere Verbesserung der Bestimmung des Verlaufs der Grenzfläche zu erhalten.

In einer Alternative wird in Schritt 209 die Außengeometrie eines Zahnmodells (Zahndatensatzes) virtuell so verformt, dass diese verformte Außengeometrie der Außengeometrie des Zahns (in gesundem Zustand) entspricht, für den der Zahnersatz vorgesehen ist. Die entsprechende Verformung (z.B. Skalierung, Verzerrung, Torsion) wird dann auf die Daten der Modellgrenzfläche rechnerisch angewandt, um so in Schritt 211 Daten zum Verlauf der Grenzfläche zwischen Kern und Außenschicht des Zahnersatzes für die Erstellung des Zahnersatzes zu erhalten.

In einer anderen Alternative wird in Schritt 213 eine Gruppe von Zahndatensätzen bestimmt, die so gewählt sind, dass ein vordefinierter Mittelwertalgorithmus bei seiner Anwendung auf die Außengeometriedaten dieser Datensätze die Außengeometrie des zu ersetzenden Zahns approximiert. Dieser Algorithmus wird dann in Schritt 215 auf die Daten zum Verlauf der natürlichen Dentin-Schmelz-Grenze in den Datensätzen angewandt, um wiederum Daten für die Erstellung des Zahnersatzes mit der erfindungsgemäßen Grenzfläche zu erhalten.

In einer dritten Alternative wird in Schritt 217 ein Zahndatensatz ausgewählt, dessen Außengeometriedaten ausreichend ähnlich zu den Außengeometriedaten des zu erstellenden Zahnersatzes (bzw. Zahns in gesundem Zustand) sind, d.h. die bei einer rechnerischen Bestimmung der Ähnlichkeit einen ausreichend guten Wert oberhalb bzw. unterhalb einer vorbestimmten Schwelle erreichen. Die Daten in diesem Datensatz werden dann zur Bestimmung des Verlaufs der Grenzfläche zwischen Kern und Außenschicht bei der erfindungsgemäßen Erstellung von Zahnersatz verwendet (Schritt 219).

Ein besonderer Vorteil der vorliegenden Erfindung liegt darin, dass sie nicht nur erlaubt, vollanatomische Zähne mittels computergestützter Fertigungstechnologien, insbesondere CAD/CAM, zu erzeugen, sondern auch einen Zahnersatz ermöglichst, der in seiner inneren Struktur an einem natürlichen Zahn orientiert ist. Der von der Erfindung vorgesehene Kern, dessen Außenform der Außenform eines natürlichen Dentinkerns eines Zahn entspricht, bietet besonders im Frontzahnbereich den Vorteil, dass man durch das Aufschichten von Schneidemassen schnell und effektiv hochästhetische Restaurationen erzielen kann, welche ein bessere ästhetische Wirkung im Vergleich zu vollanatomisch gefrästen Restaurationen haben, die nicht die innere Struktur des Zahns berücksichtigen. Bisher wurde zur Erstellung eines mehrschichtigen Zahnersatzes eine sogenannte "Cut-Back-Technik" mit manuellem Abtragen des Schneidebereiches von einer vollanatomisch gefrästen Zahnkrone vorgesehen, was einen zusätzlichen Aufwand für den Zahntechniker bedeutet. Zudem basiert die damit erreichte innere Struktur des Zahnersatzes rein auf der Vorstellung des Zahntechnikers und ist unabhängig von einer tatsächlichen, natürlichen Struktur eines Zahns.

Der erfindungsgemäß vorgesehene innere Kern des Zahnersatzes wird insbesondere in vorteilhafterweise auf Basis von Daten aus einer Datenbank auf der Grundlage von eingescannten natürlichen Zähnen erzeugt und erlaubt eine sehr naturnahe Reproduktion des zu ersetzenden natürlichen Zahnes.

Bei einer ersten Erprobung der vorliegenden Erfindung wurde der Zahnersatz aus glaskeramischen Blöcken gefertigt. Grundsätzlich sind jedoch auch andere, beispielsweise oxidkeramische, Materialien zur Verwendung im Zusammenhang mit der vorliegenden Erfindung geeignet sein. So ist es durchaus möglich, Zirkoniumdioxid bei entsprechend gewählter Transluzenz (bevorzugt 40% bis 60%, siehe oben) als Material für den Kern des erfindungsgemäßen Zahnersatz zu verwenden. Dies bringt unter anderem den Vorteil, dass man damit etwa anatomisch teilreduzierte (also mit innerer Kernstruktur entsprechend der Erfindung) vollkeramische Brücken mittels computerunterstützten Systemen herstellen kann.

Ein Aspekt der vorliegenden Erfindung betrifft eine Zahnstrukturdatenbank, welche Zähne in digitalisierter Form abbildet, wobei die Oberfläche des Zahnes eine Korrelation zu den schichtweisen inneren Zahnstrukturen aufweist. Ein weiterer Aspekt betrifft ferner ein Verfahren zur Erfassung von äußeren Zahnoberflächen, den dazugehörigen schichtweisen inneren Zahnstrukturen und ein Verfahren zur Bestimmung der Korrelation zwischen den äußeren Zahnoberflächen und den spezifisch dazugehörigen schichtweisen inneren Zahnstrukturen.

Der weitaus größte Teil des menschlichen Zahnes besteht aus Dentin, welches den ersten "Schutzmantel" für die in ihm liegende Pulpa bildet. Die Pulpa wird umgangssprachlich auch der "Zahnnerv" genannt. Der Hauptbestandteil ist locker gefügtes Bindegewebe mit zahlreichen Zellen, interzellulärer Grundsubstanz, retikulären wie auch kollagenen Fasern und nicht zuletzt auch Nerven und Gefäßen. Das Dentin wird wiederum im Kronenbereich von Zahnschmelz und im Wurzelbereich vom Wurzelzement bedeckt. Schmelz, Dentin und Zement stellen gemeinsam die Zahnhartsubstanz des menschlichen Zahnes dar. Hierbei ist der Zahnschmelz die härteste Substanz des menschlichen Körpers mit einer Vickershärte von 250-550 und einer Druckfestigkeit von 300-450 MPa.

Sein Elastizitätsmodul beträgt 50000-85000 MPa. Das Dentin hingegen ist wesentlich elastischer (Elastizitätsmodul 15000 - 20000 MPa), da es über einen deutlich höheren Anteil an organischer Substanz verfügt. Die Vickershärte beträgt beim Zahnbein 60-70 und die Druckfestigkeit liegt bei 200 - 350MPa. Der Wurzelzement ist in seiner Struktur wie auch Härte dem menschlichen Knochen ähnlich, ohne wie dieser vaskularisiert zu sein. Er gehört bereits zum Zahnhalteapparat, da an ihm die parodontalen Fasern ansetzen, die die Zähne in der Alveole beweglich verankern. Anders als in der Natur sind Restaurationen nicht nur auf einzelne Zähne beschränkt. Sie können sich darüber hinaus in Form von Brücken auch über Zahnlücken erstrecken. In einem solchen Fall muss die Restauration deutlich höhere Biegebelastungen als beispielsweise das natürliche Dentin aushalten.

Derzeit gibt es viele computergestützte Fertigungsverfahren, die keinerlei Datenbank für die Herstellung von Zähnen anbieten. Einige Systeme bieten hingegen Datenbanken an, die entweder auf den Daten von eingescannten konfektionierten Kunststoffzähnen beruhen, oder durch das manuelle Aufwachsen durch Zahntechniker entstanden sind.

Bei der in DE 102 52 298 B3 beschriebenen, sogenannten "biogenerische Kaufläche" des Cerec-Systems der Firma Sirona (Bensheim - Deutschland), das von Prof. Dr. Albert Mehl entwickelt wurde, wird auf der Grundlage von einigen Tausend eingescannten natürlichen Zähnen und anhand von Restzahnsubstanz des zu ersetzenden Zahn versucht, eine möglichst passenden Zahngeometrie aus dieser Datenbank für die fehlenden Zahnanteile zu errechnen. Ziel ist es, zu einer vergleichsweise naturnahen Geometrie von Teilkronen (Inlays, Onlays) zu kommen. Die Anwendung des "biogenerischen Zahnmodells" gibt es nur im Seitenzahnbereich. Beim biogenerischen Zahnmodell wird fehlende Zahnsubstanz der Zahnaußenfläche durch Optimierung eines generischen Zahnmodelldatensatzes des gewünschten Zahnstumpfes an die vorhandene Restzahnsubstanz und/oder Gegenbezahnung und/oder Nachbarzahnsituation und/oder Bißregistrate ergänzt. Die Anwendung des biogenerischen Prinzips auf die schichtweise innere Zahnstruktur wird in der genannten Patentschrift nicht beschrieben.

Weiterhin ist aus DE 103 12 848 A1 eine Zahndatenbank bekannt. Dieses Dokument spricht unspezifisch auch generell den Aspekt des inneren Aufbaus eines Zahns an, ohne auf Details oder gar die Dentin-Schmelz-Grenze eines natürlichen Zahns einzugehen. Eine innere Oberfläche kann beispielsweise im Seitenzahnbereich die auf der Kaufläche nach innen zur Zahnfissur (= rillenhafte Vertiefung in der Kaufläche) hin liegende Fläche des Zahnes sein, oder im Frontzahnbereich und Seitenzahnbereich die nach innen zum Gaumen oder zur Zunge hin liegende Oberfläche des Zahnes. Ein innerer Aufbau kann bei dem beschriebenen Zahnmodell die wulstartige Gestaltung auf der nach innen zur Zahnfissur (= rillenhafte Vertiefung in der Kaufläche) hin liegenden Fläche des Zahnes sein, also das Relief der Kaufläche, oder beim Frontzahn der auf der Zahninnenseite liegende (zum Gaumen oder zur Zunge hin) reliefartige Aufbau des Zahnes. Die Frage des inneren Aufbaus eines Zahns kann auch die Unterteilung in Pulpa einerseits und der Kombination von Dentin und Schmelz anderseits betreffen.

Die Firma Sirona bietet für das Cerec-System eine Datenbank an, bei der dem Benutzer im Frontzahnbereich eine statische, nach geometrischen Konstruktionsrichtlinien erzeugte Mamelonstruktur (fingerartige Ausbeulungen des Dentins in Richtung Schneidebereich) vorgegeben wird, welche dann in einem Ausgabegerät dargestellt werden kann.

In der Dissertationsarbeit von Herrn Florian Andreas Probst (Dreidimensionale Untersuchungen zur Morphologie der oberen Frontzähne - Dissertation zum Erwerb des Doktorgrades der Zahnheilkunde an der Medizinischen Fakultät der Ludwig-Maximilians-Universität zu München, vorgelegt von Florian Andreas Probst aus Dachau (2007), Berichterstatter Prof. Dr. Dr. Albert Mehl) beschreibt dieser ausführlich die dreidimensionale Morphologie der oberen Frontzähne. Auch bei dieser Arbeit wird nicht auf den inneren dreidimensionalen schichtweisen Aufbau dieser Zähne eingegangen.

Man kann zusammenfassen, dass es derzeit keine Datenbanken zum dreidimensionalen inneren schichtweisen Aufbau von Zähnen des Front- und Seitenzahnbereiches gibt. Hier wird daher unter dem Begriff "Zahnstrukturdatenbank" insbesondere eine Datenbank/Bibliothek verstanden, welche die dreidimensionalen schichtweisen inneren Strukturen und die dazugehörigen Oberflächen der jeweiligen spezifischen Zähne in digitalisierter und/oder real existierender Form umfasst.

Ebenso ist es für die automatische Generierung des schichtweisen inneren Zahnaufbaus, insbesondere des Dentinkerns, kein Verfahren vorhanden. Dies wäre jedoch sehr wichtig, da damit die Herstellungskosten für Zahnersatz und die Kosteneffizienz von CAD/CAM-Systemen gesteigert werden kann.

Im Zusammenhang mit der vorliegenden Erfindung ergibt sich eine Zahnstrukturdatenbank, die sowohl die Außenmorphologie (Oberfläche) als auch den inneren schichtweisen Aufbau (Dentin und Schmelz) von Zähnen berücksichtigt und insbesondere eine definierte dynamische Korrelation und/oder statische Korrelation und/oder biogenerische Korrelation zwischen der Außenmorphologie und dem inneren schichtweisen Aufbau von Zähnen ermöglicht. Hierbei ist auch ein Verfahren zu nennen, welches die Erfassung des inneren schichtweisen Aufbaus von Zähnen ermöglicht. Die erfassten Daten können sowohl natürliche Zähne als auch künstlich erstellte Zahnstrukturen als Grundlage haben.

Unter dem Begriff "Korrelation" wird hier die Zuordnung eines Datensatzes, der den inneren Schichtaufbau beschreibt, zu dem Datensatz verstanden, der die Zahnaußengeometrie dieses Zahnes beschreibt. Ebenso wird hier unter "Korrelation" die Zuordnung eines Datensatzes, der die Zahnaußengeometrie eines Zahnes eines Kieferteilabschnittes (z.B. 1., 2., 3., 4. Quadrant) beschreibt, zu einem Datensatz verstanden, der die Außenfläche eines anderen Zahnes des gleichen oder eines anderen Kieferteilabschnittes beschreibt. Die Korrelation wird bevorzugt bei beiden Anwendungen z.B. an natürlichen Zähnen empirisch bestimmt, durch mathematische Berechnung ermittelt oder durch zahntechnische Modelle festgelegt.

Eine Erfassung von Daten für die vorliegende Erfindung kann dabei auf verschiedene Arten erfolgen, die beispielsweise im Folgenden beschrieben werden.

Eine dreidimensionale Erfassung von Zahndaten kann durch ein Einscannen von extrahierten natürlichen Zähen erfolgen. Es können dazu sowohl mechanische als auch optische 3D - Scanner verwendet werden. Bei den optischen Scannern kann man wiederum sowohl Laserschnittscanner als auch Streifenlichtscanner verwenden. Um die innere Zahnstruktur zu erhalten, wird beispielsweise die außenliegende Schmelzschicht, welche aus anorganischen Substanzen besteht (Hydoxyl-Apatit, Fluor-Apatit, CaPO3), mittels Säuren, bevorzugt Flusssäure (HF), weggeätzt. Da der innere Dentinkern und die ganz innenliegende Zahnpulpa ("Zahnnerv") zum Großteil aus organischen Substanzen, z.B. Proteoglykanen besteht, bleibt die Zahninnengeometrie als Gerüst erhalten und kann so eingescannt werden. Durch das Vorhandensein von Arealen, die durch den Ätzvorgang nicht verändert werden, insbesondere im Bereich der Wurzel, kann eine digitale Zuordnung (das sogenannte "Matchen") von Außen- und Innengeometrie erfolgen.

Weiterhin ist es möglich, die Zahnaußen- und die schichtweise Zahninnengeometrie mittels Mikro-CT zu erfassen und diese Daten als 3D-Datensatz in der Zahndatenbank zur Verfügung zu stellen.

Ebenso ist es möglich, durch ein kontrolliertes schichtweises mechanisches Abtragen und zweidimensionale Erfassen der Schnittflächen eine dreidimensionale Zahngeometrie mit Innen- und Außenstruktur zu erstellen und diese in digitaler Form in einer Zahndatenbank zu hinterlegen.

Grundsätzlich ist es auch möglich, die dreidimensionale Struktur von natürlichen Zähnen durch ein Fotografieren aus verschiedenen Kamerapositionen bzw. ein gleichzeitiges Fotografieren mittels mehrerer Kameras aus verschiedenen Positionen (Fotogrammmetrie) zu erfassen, wobei insbesondere zum besseren Erfassen der Zahninnengeometrie der zu erfassende Zahn mittels Lichtquelle (z. B. UV-Licht, Tageslicht, Blaulicht, spezielle Plattenblitze etc.) zur Kontrasterhöhung beleuchtet werden kann, insbesondere auch von der kameraabgewandten Seite. Dieses Vorgehen hat den Vorteil, dass man keine extrahierten Zähne benötigt, sondern zerstörungsfrei eine große Anzahl von natürlichen Zähnen innerhalb eines sehr kurzen Zeitraumes erfassen kann.

Grundsätzlich ist es möglich, die Zahnaußengeometrie mittels eines Intraoralscanners, also eines Scanners, der eine 3D-Aufnahme im Mund aufnimmt, zu erfassen, insbesondere durch die Anwendung von Streifenlichtprojektion, Laserlichtschnittprojektion und/oder Kontrasttiefenmessung. Bei Verwendung einer anderen Wellenlänge für die Lichtprojektion bzw. Laserschnittprojektion dringt das Licht bzw. der Laserstrahl durch den transparenten Schmelz in den Zahn ein und wird erst an einer tieferliegenden Schicht, insbesondere der Dentinschicht reflektiert. Die durch diese Vorgehensweise erzeugten 3D-Daten bilden folglich die innere Zahnstruktur, also insbesondere den Dentinkern des Zahnes, dreidimensional ab.

Grundsätzlich ist es auch vorstellbar, durch weitere physikalische Erfassungsmethoden die Zahnaußen- und Innengeometrie zu ermitteln, insbesondere das Erfassen mittels Sonographie (Ultraschall), Röntgenstrahlung, radioaktive Strahlung etc.

Eine weitere Möglichkeit stellt ein Erzeugen von dreidimensionalen Daten von Zahnaußen- und Zahninnengeometrie durch manuelle Herstellung durch den Zahntechniker oder mittels RP-Verfahren dar. Bei einer Ausführung dieser Variante werden Abdrücke von natürlichen Zähnen genommen und dazu zweidimensionale Fotos der einzelnen Zähne gemacht, auf welchen die Dentin- und Schneidebereiche gut erkennbar sind. Die Abdrücke werden mit Superhartgips ausgegossen und die Zähne durch den Zahntechniker einzeln separiert. Anschließend wird diese Außengeometrie durch 3D-Scanning dreidimensional erfasst. In einem Folgeschritt wird durch den Zahntechniker die Außengeometrie mittels "Cut-Back"-Verfahren durch Abtragen, insbesondere mittels Abfräsen, bis auf einen Dentinkern reduziert, wobei sich der Zahntechniker bei seinem "Cut-Back" an den zweidimensionalen Fotos orientiert. Die Zahninnenstruktur wird anschließend dreidimensional durch 3D-.Scanning erfasst und anhand von nicht bearbeiteten Zahnarealen mit der Zahnaußenform zusammengeführt. Weiterhin ist es zur Arbeitserleichterung auch möglich, die einzelnen Gipszähne zu dublieren und in Wachs auszugießen. Dadurch ist eine leichtere Reduktion der Zahnaußengeometrie mittels Wachsmesser oder Cut-Backinstrumenten möglich. Die weitestgehende Möglichkeit stellt die Herstellung von Wachs- oder Kunststoffaußengeometrien anhand von 3D-Daten von Zähnen dar, die durch Intraoralscanning erzeugt worden sind. Diese Daten werden dann mittels Fräsverfahren oder RP-Verfahren (Rapid Prototyping) in eine Realgeometrie (z.B. in Wachs oder Kunststoff) umgesetzt und können nun durch den Zahntechniker im Cut-Back-Verfahren weiterbearbeitet werden und dann die Zahninnengeometrie dreidimensional eingescannt und mit der Außengeometrie zusammengeführt werden.

Die der vorliegenden Erfindung zugrunde liegende Erkenntnis liegt darin, neben den Zahnaußenstrukturen auch die schichtweisen inneren Zahngeometrien zu erfassen und zusammen mit den Zahnaußengeometrien zu verwenden, beispielsweise in einer Datenbank hinterlegt. Besonders vorteilhaft ist es, wenn die Zahnaußen- und schichtweisen Innenstrukturen dynamisch miteinander verbunden sind, so dass bei einer virtuellen Formveränderung der Außengeometrie auch die innere Zahnstruktur mit verändert werden kann. Ein weiterer vorteilhafter Aspekt liegt darin, dass es aufgrund der digitalen Erfassung einer großen Anzahl von dreidimensionalen Zahnaußen- und Zahninnengeomtrien möglich ist, einen festen Zusammenhang zwischen der schichtweisen Zahninnenstruktur und Zahnaußenform zu schaffen. Weiterhin kann erfindungsgemäß die Datenbank in die Lage versetzt werden, bei Auswahl einer geeigneten Außengeometrie dem Benutzer einen Zahninnengeometrievorschlag zu machen, der mit hoher Wahrscheinlichkeit der natürlichen Zahninnengeometrie des natürlichen Zahnes entspricht.

Die Erfinder haben einen Zusammenhang zwischen Zahnaußen- und Zahninnengeometrie erkannt, beispielsweise dass bestimmte Formtypen (z.B. oval, quadratisch, dreieckig) auf charakteristische innere Zahnstrukturen (z.B. ausgeprägte Mamelonstrukturen bei ausladenden dreieckigen Zähnen) hinweisen. Die Erfindung ermöglicht es, diese Erkenntnisse in dreidimensionaler digitaler Form als dynamische Datenbank zu erfassen.

Die etwa mit den oben beschriebenen Verfahren digital erfassten, dreidimensionalen Datensätze von einer Vielzahl natürlicher Zähne werden vorteilhafterweise in der Datenbank sowohl mit deren Zahnaußengeometrie als auch mit der schichtweisen inneren Zahnstruktur abgespeichert. Ebenso können in gleicher Weise Datensätze in der Datenbank hinterlegt werden, welche durch manuelle Vorarbeit und anschließende dreidimensionale digitale Erfassung erzeugt werden.

Es ist auch möglich, Datensätze von vollbezahnten Kieferteilabschnitten digital dreidimensional zu erfassen, wie beispielsweise der komplette vollbezahnte Oberkieferfrontzahnbereich (von Eckzahn zu Eckzahn), die komplette Unterkieferfront (von Eckzahn zu Eckzahn), sowie jeweils die 4 Seitenzahnsegmente von Ober- und Unterkiefer (von 1. Prämolar bis zum 3 Molar). Zwischen den Datensätzen der Einzelzähne wird eine mathematische Verknüpfung erstellt, sodass ein übergeordneter Datensatz entsteht, welche die Datensätze aller Einzelzähne des Kieferteilabschnittes enthält. Somit kann jedem Zahntyp aus dem Kieferteilabschnitt ein korrelierender anderer Zahntyp aus dem gleichen Kieferteilabschnitt zugeordnet werden.

Die Zuordnung von eingescannten Zähnen zu den verschiedenen Zahntypen (mittlerer Schneidezahn, seitlicher Schneidezahn, Eckzahn, 1. und 2. Prämolar, 1., 2. und 3.Molar) erfolgt beispielsweise individuell durch den Programmierer. Eine weitere Unterteilung der jeweiligen Zahntypen in verschiedene Formgruppen kann durch Beurteilung zahnspezifischer Oberflächen- und Formmerkmale erfolgen. Diese Merkmale können beispielsweise sein:

- mesiodistale Krümmung
- inzisozervikale Krümmung
- Rundung der distalen Schneidekante
- Rundung der mesialen Schneidekante
- Winkelmerkmal
- Inzisalkantenverlauf
- Oberflächenstrukturbausteine wie Längsrillen oder Erhabenheiten

Die Eingruppierung der gescannten Datensätze in verschiedene Formgruppen kann entweder durch visuelle Beurteilung oder aber digital mit einer. "Best-Fit-Alignment"-Berechnung erfolgen. Das Ergebnis ist in beiden Fällen eine Zahndatenbank, die eine Unterteilung der verschiedenen Zahntypen in mehrere Formguppen aufweist.

In gleicher Weise ist es auch möglich, die digital erfassten inneren Zahnstrukturen (insbesondere Dentinkernstrukturen) der verschiedenen Zahntypen (mittlerer Schneidezahn, seitlicher Schneidezahn, Eckzahn, 1. und 2. Prämolar, 1., 2. und 3.Molar) mit der o.g. Methode verschiedenen Formgruppen zuzuordnen. Die Zuordnung erfolgt hier ebenfalls entweder durch visuelle Beurteilung oder beispielsweise durch "Best-Fit-Alignment"-Berechnung. Es entsteht hier eine Datenbank mit inneren Zahnstrukturen, die eine Gliederung in verschiedene Formgruppen aufweist. Zusätzlich ist es möglich, eine Korrelation zwischen Zahninnengeomtrien und Zahnaußengeometrien herzustellen. Einer bestimmten Zahnaußenform wird mit Hilfe der Datenbank ein Zahninnengeomtrievorschlag gemacht, der mit hoher Wahrscheinlichkeit der wirklichen Zahninnengeometrie entspricht. Diese Wahrscheinlichkeit ist umso größer, je mehr Datensätze in der Zahndatenbank enthalten sind.

Hier ist es als neuartige Anwendung auch möglich, das biogenerische Zahnmodell zu verwenden. Dabei wird eine Durchschnittsinnengeometrie (beispielsweise Dentinkern) aus der Vielzahl der vorhandenen verschiedenen Datensätze aus der Datenbank errechnet, welche alle für den jeweiligen Zahntyp charakteristischen Merkmale der Zahninnengeometrie aufweist. Es ist dabei keine reine Überlagerung der jeweils einzelnen Punkte $(x_n, y_n, z_n)$, welche die Zahninnengeometrie beschreiben, da dies zu einem verrauschten, strukturlosen Datensatz führen würde, welcher in keiner Weise einer typischen Zahninnengeometrie entspricht. Vielmehr wird der "Dentinkern" in einzelne Bausteine (Mamelonstrukturen, Inzisalfurchen, Inzisalverlauf des Dentinkerns etc.) zerlegt, um so " Korrespondenzen" zu finden, um gleiches mit gleichem zu mitteln. Dadurch wird verhindert, dass essentielle Strukturen des "Dentinkerns" beim Bilden der Durchschnittsgeometrie heraus gemittelt werden, wie dies bei konventioneller Überlagerung beispielsweise bei den Mamelonstrukturen geschieht. Mit diesem Verfahren erhält man eine "Durchschnittszahninnengeomtrie" mit den gemittelten Werten der charaktereistischen Bausteine, wie Mamelonstrukturen, Inzisalfurchen, Inzisalkante usw.

Im nächsten Schritt wird die Abweichung der einzelnen Innengeomtrien von der Durchschnittsinnengeometrie durch Hauptachsentransformation ermittelt. Soll letztendlich eine innere schichtweise Zahnstruktur rekonstruiert werden, so wird hier das biogenerische Zahnmodell hierbei mit der Zahnaußengeometrie verknüpft. Dabei entspricht der schichtweise innere Zahnaufbau, insbesondere der Dentinkern, der fehlenden Zahnsubstanz bei der biogenerischen Inlayrekonstruktion. Eine bestimmte räumliche Verteilung weniger Konstruktionspunkte auf der Zahnaußenfläche bedingt eine bestimmte Morphologie des Dentinkerns. Die Kombination des "Durchschnittsdentinkerns" mit dem biogenerischen Modell der Zahnaußengeometrie ermöglicht es, mit hoher Wahrscheinlichkeit einer vorgegebenen Zahnaußengeometrie den geeignetsten Dentinkern zuzuordnen. Der morphologische Zusammenhang zwischen Zahnaußengeometrie und dem schichtweisen inneren Zahnaufbau beruht in seiner grundsätzlichen Ausbildung auf einem genetisch bedingten Bauplan, so dass mit großer Wahrscheinlichkeit einer bestimmten Zahnaußengeomtrie eine schichtweise innere Zahnstruktur, insbesondere dem Dentinkern, eine bestimmte Zahnaußengeometrie zugeordnet werden kann und umgekehrt.

Nach der digitalen Verknüpfung der Zahnaußengeometrie mit der Zahninnengeometrie entsteht eine Korrelation zwischen diesen beiden Datensätzen, welche dynamisch und/oder statisch sein kann. Bei einer statischen Verknüpfung wird die Innengeometrie bei einer Veränderung der Außengeometrie nicht verändert, d.h. dass z.B. der Dentinkern in gleicher Form erhalten bleibt. Bei einer dynamischen Korrelation wird hingegen die innere Zahnstruktur proportional mit der Zahnaußenfläche mitverändert. Alle X, Y, Z - Werte der Zahninnengeometrie ändern sich bei Vergrößerung oder Verkleinerung der Zahnaußengeometrie mit dem gleichen Faktor wie die X, Y ,Z - Werte der Zahnaußengeometrie (Skalierung). Eine Rotation erfolgt mit dem gleichen Winkelmaß, eine Translation mit den gleichen X, Y, Z - Werten durch Aufaddieren der Translationswerte.

Die Verwendung dieser Datenbank mit Korrelation zwischen Zahninnen- und Zahnaußengeometrie (Korrelationsdatenbank) bietet verschiedene Möglichkeiten, Zahnersatzteile herzustellen. Mit Hilfe von computergestützten Ausgabegeräten (CNC, RP) werden Zahnersatzteile gefertigt, welche den schichtweisen inneren Aufbau des natürlichen Zahnes nachahmen. Der innere Aufbau des Zahnersatzteiles wird auf der Basis eines Datensatzes aus der Datenbank hergestellt, wobei dessen äußere Oberfläche exakt der inneren Zahnstruktur eines ausgewählten Datensatzes aus der Datenbank entspricht. Als Materialien für die Herstellung dieses inneren Aufbaues kommen Werkstoffe zum Einsatz, die eine in der Farbe und Transluzenz zahnähnliche Ästhetik aufweisen, insbesondere Kunststoffe, Glaskeramiken, Feldspatkeramiken, Litiumdisilikatkeramiken, sowie oxidische Hochleistungskeramiken wie beispielsweise Zirkoniumdioxid und Aluminiumoxid. Auf diese computergefertigte innere Struktur des Zahnersatzteiles wird im Anschluss der sog. Schneidebereich aufgebaut. Dies kann manuell geschehen z. B. durch Aufschichten oder Aufwachsen und Überpressen. Ebenso ist es möglich, dass dieser Schneidebereich durch Differenzberechnung der Datensätze von äußerer Zahnoberfläche und innerer Zahnstruktur erzeugt wird und somit als Datensatz zur Verfügung steht und durch computergestützte Verfahren eine Realgeometrie hergestellt werden kann. In einem anschließenden Verfügeschritt wird dieser Schneidebereich auf den Dentinkern aufgebracht, insbesondere durch Aufsintern mittels keramischer Konnektormasse, durch Aufpolymerisieren oder durch Aufkleben.

Sollen zahntechnische Restaurationen für einen Patienten hergestellt werden, gibt es erfindungsgemäß mehrere Möglichkeiten, diese Restaurationen digital zu konstruieren und herzustellen. Beispiele hierfür sind im Folgenden aufgeführt.

Die Kiefersituation mit den zu ersetzenden Zähnen sowie den Nachbarzähnen wird durch 3D Scannen (Intraoral oder extraoral) erfasst und digitalisiert. Bei Vorhandensein von spiegelbildlichen Zähnen wird dessen dreidimensionale Struktur gespiegelt. Es wurde gefunden, dass der spiegelsymmetrische Ersatz von Frontzähnen hinsichtlich der approximalen, okklusalen und ästhetischen Gesichtspunkte zufriedenstellend ist. Die Außenstruktur des gespiegelten Zahnes wird nun durch iterative Prozesse solange mit der Vielzahl von hinterlegten Daten von natürlichen oder manuell erstellten Zähnen verglichen und verrechnet, bis der geeignetste Datensatz gefunden worden ist. Zur Ermittlung des geeigneten Datensatzes durch iterative Prozesse kann man ein Ähnlichkeitsmaß bilden, welches sich aus der Standardabweichung der Werte des geringsten Abstandes von Punkten der Oberfläche des gespiegelten Zahnes mit den jeweils nächstliegenden Punkten der jeweiligen Zahndatensätze aus der Datenbank ergibt.

Eine Standardabweichung stddev über den geringsten Abstand als Ähnlichkeitsmaß ergibt sich beispielsweise als:

$$\text{stddev} \quad = \quad \sqrt{\frac{\sum_{i,j}^{n} \left[ (x_{1i} - x_{2j}) + (y_{1i} - y_{2j}) + (z_{1i} - z_{2j}) \right]^2}{n}}$$

Dieser Ansatz wird auch "Best-Fit-Überlagerung" ("Best-Fit-Alignment") genannt. Zum Erreichen des "Best-Fit-Alignment" wird der Zahn gespiegelt und anschließend durch Rotation, Translation und eventuell auch Größenskalierung mit dem zu vergleichenden Zahn aus der Datenbank in optimalster Position überlagert. Dafür können Bildanalyseprogramme verwendet werden (z.B. Geomagic GmbH Köln, Deutschland). Da für den geeignetsten Datensatz eine innere schichtweise Zahnstruktur existiert, kann diese für die Herstellung des Zahnersatzes, insbesondere die Herstellung eines Dentinkerns mittels computergestützten Verfahren, genutzt werden. Nach Erstellen des Dentinkerns kann auf diesen entweder manuell der Schneidebereich aufgetragen werden oder ein mittels computergestützter Fertigung erstellter Schneidebereich mit dem Dentinkern verbunden werden, insbesondere durch Aufkleben, Aufsintern oder Aufpolymerisieren.

Die Kiefersituation mit den zu ersetzenden Zähnen sowie den Nachbarzähnen wird durch 3D Scannen (Intraoral oder extraoral) erfasst und digitalisiert. Sind keine spiegelbildlichen Zähne in diesem Kiefer vorhanden, so wird vom Benutzer aus der Datenbank ein nach dem Ermessen des Benutzers geeigneter Datensatz ausgewählt und kann vom Benutzer an die vorhandene Situation dreidimensional durch Rotation (Drehen), Translation (Verschieben) und Skalierung (Größenveränderung) angepasst werden. Aufgrund der dynamischen Korrelation des Datensatzes der dreidimensionalen Zahnaußengeometrie mit dem Datensatz des dreidimensionalen inneren schichtweisen Aufbaus wird dem Benutzer ein innerer schichtweiser Aufbau, z.B. ein Dentinkern vorgeschlagen. Eine individuelle Veränderung dieses vorgeschlagenen Dentinkerns ist durch den Benutzer zusätzlich möglich. Anschließend wird der dreidimensionale Datensatz des schichtweisen inneren Aufbaues, insbesondere des Dentinkerns, an einem computergestützten Ausgabegerät, insbesondere CNC-Fräsmaschine, RP-Maschine, in eine Realgeometrie umgesetzt. Nach Erstellen des Dentinkerns kann auf diesen entweder manuell der Schneidebereich aufgetragen werden oder ein mittels computergestützter Fertigung erstellter Schneidebereich mit dem Dentinkern verbunden werden, insbesondere durch Aufkleben, Aufsintern oder Aufpolymerisieren.

Die Kiefersituation mit den zu ersetzenden Zähnen sowie den Nachbarzähnen wird durch 3D Scannen (Intraoral oder extraoral) erfasst und digitalisiert. Sind keine spiegelbildlichen Zähne in diesem Kiefer vorhanden, so wird vom computergestützten Programm die Restbezahnung mit den Datensätzen aus der Datenbank der Kieferteilabschnitte verglichen und aus diesen durch "Best-Fit-Alignment" der passendste Datensatz ausgewählt. Da diesem Datensatz exakt ein Datensatz des fehlenden Zahnes zugeordnet ist, kann dieser als Grundlage für den zu ersetzenden Zahn dienen. Aufgrund der dynamischen Korrelation der dreidimensionalen Zahnaußengeometrie mit dem dreidimensionalen inneren schichtweisen Aufbaus wird dem Benutzer ein innerer schichtweiser Aufbau, z.B. ein Dentinkern vorgeschlagen werden. Eine individuelle Veränderung dieses vorgeschlagenen Dentinkerns ist durch den Benutzer zusätzlich möglich. Anschließend wird der dreidimensionale Datensatz des schichtweisen inneren Aufbaues, insbesondere des Dentinkerns, an einem computergestützten Ausgabegerät, insbesondere CNC-Fräsmaschine, RP-Maschine, in eine Realgeometrie umgesetzt. Nach Erstellen des Dentinkerns kann auf diesen entweder manuell der Schneidebereich aufgetragen werden oder ein mittels computergestützter Fertigung erstellter Schneidebereich mit dem Dentinkern verbunden werden, insbesondere durch Aufkleben, Aufsintern oder Aufpolymerisieren.

Eine weitere Anwendung der vorliegenden Erfindung besteht darin, dass die beschriebene Datenbank, das beschriebene Zahnmodell und das beschriebene Verfahren zur Identifizierung von lebenden und toten Lebewesen benutzt wird. Dabei können die Datensätze der natürlichen und/oder künstlichen Zähne der zu identifizierenden Lebewesen mit den Datensätzen der natürlichen und/oder künstlichen Zähne aus der Datenbank verglichen werden und auf maximale Übereinstimmung geprüft werden. An den äußeren Zahnoberflächen findet beispielsweise durch den Kauvorgang oder durch das Zähneputzen eine gewisse Abnutzung statt. Deshalb sind zur die Identifizierung besonders die Bereiche der Zahnaußenflächen geeignet, die diesen Abnützungen nicht oder nur wenig ausgesetzt sind. Dies sind insbesondere die zum Gaumen und zur Zunge hin gewandten Flächen von natürlichen Zähnen (Palatinal- und Lingualflächen). Da die inneren schichtweisen Zahnstrukturen von natürlichen Zähnen keiner mechanischen Abnutzung ausgesetzt sind, sind diese für eine Identifizierung ebenfalls geeignet. Hierbei sind allerdings die Bereiche der Zahnpulpa ungeeignet, da sich diese mit zunehmendem Lebensalter verkleinert. Als geeignet kann man hingegen die Strukturen des Dentinkerns ansehen. Die Verwendung der Datensätze der beschriebenen Strukturen von natürlichen Zähnen zum Zwecke der Identifizierung kann man aufgrund der Einzigartigkeit (jede äußere Zahnoberfläche und jeder Dentinkern existiert nur einmal auf der Welt) auch als "Dentalen Fingerabdruck" bezeichnen.

**Patentansprüche**

1. Verfahren zur Herstellung eines Zahnersatzes (10), mit einem Erzeugen (203) des Zahnersatzes (10) mit einem Kern (12) und einer Außenschicht (14), wobei der Kern (12) und die Außenschicht (14) zwischeneinander eine Grenzfläche (8') definieren,
**dadurch gekennzeichnet, dass**
der Verlauf der Grenzfläche (8') einen natürlichen Verlauf der Dentin-Schmelz-Grenze (8) eines Zahnes (1) abbildet, für den der Zahnersatz (10) vorgesehen ist,
wobei der Verlauf der Grenzfläche (8')

(i) auf Basis einer mit Hilfe von Computertomographie, Sonographie, Röntgenaufnahme, Nahbereichsfotogrammetrie und/oder Fotografie erfolgten Aufnahme der Dentin-Schmelz-Grenze (8) des Zahns (1) bestimmt (201) wird, für den der Zahnersatz (10) vorgesehen ist, und/oder
(ii) auf Basis von mittelbar oder unmittelbar aufgenommenen Geometriedaten der Außengeometrie (2) des Zahns (1), für den der Zahnersatz (10) vorgesehen ist, unter Nutzung einer Datenbank mit Zahndatensätzen bestimmt (205) wird, wobei in den Zahndatensätzen jeweils eine Zahnaußengeometrie mit einer dazugehörigen schichtweisen Zahninnengeometrie hinterlegt ist.

2. Verfahren nach Anspruch 1, wobei die mittelbar aufgenommenen Geometriedaten aus Geometriedaten der Restgebiß-Situation bestimmt werden (207).

3. Verfahren nach einem der vorstehenden Ansprüche, wobei das Bestimmen (205) des Verlaufs der Grenzfläche (8') umfasst:

   - virtuelles Verformen (209) der Modellaußengeometrie eines vorbestimmten Zahndatensatzes zur Anpassung an die Außengeometrie (2) des Zahns (1), für den der Zahnersatz (10) vorgesehen ist, und
   - virtuelles Verformen (211) einer Modellgrenzfläche des vorbestimmten Zahndatensatzes entsprechend der Verformung der Außengeometrie zur Bestimmung der Grenzfläche (8').

4. Verfahren nach einem der vorstehenden Ansprüche, wobei das Bestimmen (205) des Verlaufs der Grenzfläche (8') umfasst:

   - Bestimmen (213) einer Gruppe von Zahndatensätzen, wobei ein vorbestimmter Mittelwert der Modellaußengeometrie der Gruppe von Zahndatensätzen der Außengeometrie (2) des Zahns (1) entspricht, für den der Zahnersatz (10) vorgesehen ist, und
   - Bestimmen (215) des Verlaufs der Grenzfläche (8') mittels des vorbestimmten Mittelwerts von Modellgrenzflächen der Gruppe von Zahndatensätzen.

5. Verfahren nach Anspruch 4, wobei der Mittelwert durch eine Mittelung der absoluten und/oder relativen Positionen von vorbestimmten Referenzpunkten bestimmt wird.

6. Verfahren nach einem der vorstehenden Ansprüche, wobei das Bestimmen (205) des Verlaufs der Grenzfläche (8') umfasst:

   - Bestimmen (217) eines Zahndatensatzes, dessen Modellaußengeometrie ein vorbestimmtes Ähnlichkeitskriterium gegenüber der Außengeometrie (2) des Zahns (1) erfüllt, für den der Zahnersatz (10) vorgesehen ist, und
   - Bestimmen (219) des Verlaufs der Grenzfläche (8') auf Basis der Modellgrenzfläche des Zahndatensatzes.

7. Verfahren nach einem der vorstehenden Ansprüche, wobei die Modellgrenzfläche wenigstens eines Zahndatensatzes auf Basis einer Aufnahme der Dentin-Schmelz-Grenze (8) eines natürlichen Zahns (1) mit Hilfe von Computertomographie, Sonographie, Röntgenaufnahme, Nahbereichsfotogrammetrie und/oder Fotographie und/oder einer Aufnahme der Außengeometrie (8) des Dentins (4) eines natürlichen Zahns (1) nach Entfernung des Schmelzes (5) bestimmt ist.

8. Verfahren nach Anspruch 1 oder 7, wobei die Aufnahme der Dentin-Schmelz-Grenze (8) mit Hilfe von Nahbereichsfotogrammetrie und/oder Fotographie unter Verwendung von Licht erfolgt, für das der Schmelz (5) des Zahns (1) durchlässig ist.

9. Verfahren nach einem der vorstehenden Ansprüche, wobei das Material oder die Materialien für Kern (12) und Außenschicht (14) derart gewählt werden und/oder das Erzeugen von Kern (12) und Außenschicht (14) derart ausgeführt wird, dass die Transluzenz der Außenschicht (14) höher ist als die des Kerns (12).

10. Verfahren nach einem der vorstehenden Ansprüche, wobei die Transluzenz des Kerns (12) im Bereich von 20 bis 65 %, bevorzugt im Bereich von 40 bis 60 %, liegt und die Transluzenz der Außenschicht (14) im Bereich von 65 bis 95 %, bevorzugt im Bereich von 67,5 bis 85 %, liegt.

11. Verfahren nach einem der vorstehenden Ansprüche, wobei
der Kern (12) ein oxidkeramisches Material, ein silikatkeramisches Material und/oder ein Kunststoffmaterial aufweist oder daraus besteht und/oder
die Außenschicht (14) ein oxidkeramisches Material, ein silikatkeramisches Material und/oder ein Kunststoffmaterial aufweist oder daraus besteht.

12. Vorrichtung zur Ausführung eines Verfahrens nach einem der vorstehenden Ansprüche, mit Mitteln zum Erzeugen (203) des Zahnersatzes (10) mit einem Kern (12) und einer Außenschicht (14), wobei der Kern (12) und die Außenschicht (14) zwischeneinander eine Grenzfläche (8') definieren,

**dadurch gekennzeichnet, dass**

der Verlauf der Grenzfläche (8') einen natürlichen Verlauf der Dentin-Schmelz-Grenze (8) eines Zahnes (1) abbildet, für den der Zahnersatz (10) vorgesehen ist,

wobei die Vorrichtung Mittel zum Bestimmen des Verlaufs der Grenzfläche (8')

(i) auf Basis einer mit Hilfe von Computertomographie, Sonographie, Röntgenaufnahme, Nahbereichsfotogrammetrie und/oder Fotographie erfolgten Aufnahme der Dentin-Schmelz-Grenze (8) des Zahns (1), für den der Zahnersatz (10) vorgesehen ist, und/oder

(ii) auf Basis von mittelbar oder unmittelbar aufgenommenen Geometriedaten der Außengeometrie (2) des Zahns (1) unter Nutzung einer Datenbank mit Zahndatensätzen aufweist, für den der Zahnersatz (10) vorgesehen ist, wobei in den Zahndatensätze jeweils eine Zahnaußengeometrie mit einer dazugehörigen schichtweisen Zahninnengeometrie hinterlegt ist.

**13.** Computerprogramm mit Programmmitteln, die eine Vorrichtung nach Anspruch 12 zur Durchführung eines Verfahrens nach einem der Ansprüche 1 bis 11 veranlassen, wenn das Computerprogramm auf der Vorrichtung ausgeführt wird.

**Claims**

**1.** Method for producing a denture (10) with production (203) of the denture (10) with a core (12) and an outer layer (14), wherein the core (12) and the outer layer (14) define a boundary face (8') between them,

**characterised in that**

the path of the boundary face (8') depicts a natural path of the dentine/enamel boundary (8) of a tooth (1) for which the denture (10) is provided,

wherein the path of the boundary face (8')

(i) is determined (201) on the basis of a recording carried out using computer tomography, sonography, X-ray imaging, close-range photogrammetry and/or photography of the dentine/enamel boundary (8) of the tooth (1) for which the denture (10) is provided and/or

(ii) is determined (205) on the basis of indirectly or directly recorded geometry data of the outer geometry (2) of the tooth (1) for which the denture (10) is provided, using a database with tooth data sets (205), wherein in the tooth data sets a tooth outer geometry is stored with an associated layered tooth inner geometry.

**2.** Method according to claim 1, wherein the indirectly recorded geometry data are determined (207) from geometry data of the remaining dentition situation.

**3.** Method according to either of the preceding claims, wherein the determination (205) of the path of the boundary face (8') comprises:

- virtual deformation (209) of the model outer geometry of a predetermined tooth data set for adapting to the outer geometry (2) of the tooth (1) for which the denture (10) is provided, and
- virtual deformation (211) of a model boundary face of the predetermined tooth data set in accordance with the deformation of the outer geometry in order to determine the boundary face (8').

**4.** Method according to any one of the preceding claims, wherein the determination (205) of the path of the boundary face (8') comprises:

- determining (213) a group of tooth data sets, wherein a predetermined mean value of the model outer geometry of the group of tooth data sets corresponds to the outer geometry (2) of the tooth (1) for which the denture (10) is provided, and
- determining (215) the path of the boundary face (8') by means of the predetermined mean value of model boundary faces of the group of tooth data sets.

**5.** Method according to claim 4, wherein the mean value is determined by averaging the absolute and/or relative positions of predetermined reference points.

**6.** Method according to any one of the preceding claims,
wherein the determination (205) of the path of the boundary face (8') comprises:

- determining (217) a tooth data set, whose model outer geometry complies with a predetermined similarity criterion with respect to the outer geometry (2) of the tooth (1) for which the denture (10) is provided, and
- determining (219) the path of the boundary face (8') on the basis of the model boundary face of the tooth data set.

**7.** Method according to any one of the preceding claims,
wherein the model boundary face of at least one tooth data set is determined on the basis of a recording of the dentine/enamel boundary (8) of a natural tooth (1) using computer tomography, sonography, X-ray imaging, close-range photogrammetry and/or photography and/or a recording of the outer geometry (8) of the dentine (4) of a natural tooth (1) after removal of the enamel (5).

**8.** Method according to claim 1 or 7, wherein the recording of the dentine/enamel boundary (8) is carried out using close-range photogrammetry and/or photography using light to which the enamel (5) of the tooth (1) is permeable.

**9.** Method according to any one of the preceding claims,
wherein the material or the materials is/are selected for the core (12) and outer layer (14) in such a manner and/or the production of the core (12) and outer layer (14) is carried out in such a manner that the translucence of the outer layer (14) is higher than that of the core (12).

**10.** Method according to any one of the preceding claims,
wherein the translucence of the core (12) is in the range from 20 to 65%, preferably in the range from 40 to 60% and the translucence of the outer layer (14) is in the range from 65 to 95%, preferably in the range from 67.5% to 85%.

**11.** Method according to any one of the preceding claims,
wherein
the core (12) has or comprises an oxide ceramic material, a silicate ceramic material and/or a plastics material and/or the outer layer (14) has or comprises an oxide ceramic material, a silicate ceramic material and/or a plastics material.

**12.** Device for carrying out a method according to any one of the preceding claims, having means for producing (203) the denture (10) with a core (12) and an outer layer (14),
wherein the core (12) and the outer layer (14) define a boundary face (8') between them,
**characterised in that**
the path of the boundary face (8') depicts a natural path of the dentine/enamel boundary (8) of a tooth (1) for which the denture (10) is provided,
wherein the device has means for determining the path of the boundary face (8')

(i) on the basis of a recording carried out using computer tomography, sonography, X-ray imaging, close-range photogrammetry and/or photography of the dentine/enamel boundary (8) of the tooth (1) for which the denture (10) is provided and/or
(ii) on the basis of indirectly or directly recorded geometry data of the outer geometry (2) of the tooth (1) using a database with tooth data sets for which the denture (10) is provided, wherein in the tooth data sets a tooth outer geometry is stored with an associated layered tooth inner geometry.

**13.** Computer programme having programming means which cause a device according to claim 12 to carry out a method according to any one of claims 1 to 11 when the computer programme is carried out on the device.

**Revendications**

**1.** Procédé servant à fabriquer une prothèse dentaire (10), comprenant une étape consistant à produire (203) la prothèse dentaire (10) avec une partie centrale (12) et une couche extérieure (14), dans lequel la partie centrale (12) et la couche extérieure (14) définissent entre elles une interface (8'),
**caractérisé en ce que**
le profil de l'interface (8') reproduit un profil naturel de la limite dentine-émail (8) d'une dent (1) pour laquelle la prothèse dentaire (10) est prévue,

dans lequel le profil de l'interface (8')

(i) est défini (201) sur la base d'une prise de vue de la limite dentine-émail (8) de la dent (1) pour laquelle la prothèse dentaire (10) est prévue, effectuée à l'aide d'une tomographie assistée par ordinateur, d'une sonographie, d'une radiographie, d'une photogrammétrie de proximité et/ou d'une photographie, et/ou
(ii) est défini (205) sur la base de données géométriques prises indirectement ou directement de la géométrie extérieure (2) de la dent (1) pour laquelle la prothèse dentaire (10) est prévue, en utilisant une base de données comprenant des ensembles de données de dents, dans lequel respectivement une géométrie extérieure de dent est enregistrée avec une géométrie intérieure de dent par couches associée dans les ensembles de données de dents.

2. Procédé selon la revendication 1 dans lequel les données géométriques prises indirectement sont définies (207) à partir de données géométriques de la situation du reste de la dentition.

3. Procédé selon l'une quelconque des revendications précédentes, dans lequel la définition (205) du profil de l'interface (8') comprend :

- une déformation (209) virtuelle de la géométrie extérieure type d'un ensemble de données de dents prédéfini aux fins de l'adaptation à la géométrie extérieure (2) de la dent (1) pour laquelle la prothèse dentaire (10) est prévue, et
- une déformation (211) virtuelle d'une interface type de l'ensemble de données de dents prédéfini conformément à la déformation de la géométrie extérieure afin de définir l'interface (8').

4. Procédé selon l'une quelconque des revendications précédentes, dans lequel la définition (205) du profil de l'interface (8') comprend :

- la définition (213) d'un groupe d'ensembles de données de dents, dans lequel une valeur moyenne prédéfinie de la géométrie extérieure type correspond au groupe d'ensembles de données de dents de la géométrie extérieure (2) de la dent (1) pour laquelle la prothèse dentaire (10) est prévue, et
- la définition (215) du profil de l'interface (8') au moyen de la valeur moyenne prédéfinie d'interfaces types du groupe d'ensembles de données de dents.

5. Procédé selon la revendication 4, dans lequel la valeur moyenne est définie par la réalisation d'une moyenne des positions absolues et/ou relatives de points de référence prédéfinis.

6. Procédé selon l'une quelconque des revendications précédentes, dans lequel la définition (205) du profil de l'interface (8') comprend :

- la définition (217) d'un ensemble de données de dents, dont la géométrie extérieure type remplit un critère de similarité prédéfini par rapport à la géométrie extérieure (2) de la dent (1) pour laquelle la prothèse dentaire (10) est prévue, et
- la définition (219) du profil de l'interface (8') sur la base de l'interface type de l'ensemble de données de dents.

7. Procédé selon l'une quelconque des revendications précédentes, dans lequel l'interface type d'au moins un ensemble de données de dents est définie sur la base d'une prise de vue de la limite dentine-émail (8) d'une dent (1) naturelle à l'aide d'une tomographie assistée par ordinateur, d'une sonographie, d'une radiographie, d'une photogrammétrie de proximité et/ou d'une photographie et/ou d'une prise de vue de la géométrie extérieure (8) de la dentine (4) d'une dent (1) naturelle après le retrait de l'émail (5).

8. Procédé selon la revendication 1 ou 7, dans lequel la prise de vue de la limite dentine-émail (8) est effectuée à l'aide d'une photogrammétrie de proximité et/ou d'une photographie en utilisant de la lumière, que l'émail (5) de la dent (1) laisse passer.

9. Procédé selon l'une quelconque des revendications précédentes, dans lequel le matériau ou les matériaux pour la partie centrale (12) et la couche extérieure (14) sont choisis de telle manière et/ou l'étape consistant à produire la partie centrale (12) et la couche extérieure (14) est mise en oeuvre de telle manière que la translucidité de la couche extérieure (14) est plus élevée que celle de la partie centrale (12).

10. Procédé selon l'une quelconque des revendications précédentes, dans lequel la translucidité de la partie centrale (12) se situe dans la plage allant de 20 à 65 %, de manière préférée dans la plage allant de 40 à 60 % et la translucidité de la couche extérieure (14) se situe dans la plage allant de 65 à 95 %, de manière préférée dans la plage allant de 67,5 à 85 %.

11. Procédé selon l'une quelconque des revendications précédentes, dans lequel
la partie centrale (12) présente un matériau en céramique oxydée, un matériau en céramique silicatée et/ou un matériau en matière synthétique ou en est constituée, et/ou
la couche extérieure (14) présente un matériau en céramique oxydée, un matériau en céramique silicatée et/ou un matériau en matière synthétique ou en est constituée.

12. Dispositif servant à exécuter un procédé selon l'une quelconque des revendications précédentes, comprenant des moyens servant à produire (203) une prothèse dentaire (10) avec une partie centrale (12) et une couche extérieure (14), dans lequel la partie centrale (12) et la couche extérieure (14) définissent entre elles une interface (8'),
**caractérisé en ce que**
le profil de l'interface (8') reproduit un profil naturel de la limite dentine-émail (8) d'une dent (1) pour laquelle la prothèse dentaire (10) est prévue,
dans lequel le dispositif présente des moyens servant à définir le profil de l'interface (8')

(i) sur la base d'une prise de vue de la limite dentine-émail (8) de la dent (1) pour laquelle dent la prothèse dentaire (10) est prévue, effectuée à l'aide d'une tomographie assistée par ordinateur, d'une sonographie, d'une radiographie, d'une photogrammétrie de proximité et/ou d'une photographie, et/ou
(ii) sur la base de données géométriques prises indirectement ou directement de la géométrie extérieure (2) de la dent (1) pour laquelle la prothèse dentaire (10) est prévue, en utilisant une base de données comprenant des ensembles de données de dents, dans lequel respectivement une géométrie extérieure de dent est enregistrée avec une géométrie intérieure de dent par couches associée dans les ensembles de données de dents.

13. Programme informatique comprenant des moyens de programme, qui amènent un dispositif selon la revendication 12 à mettre en oeuvre un procédé selon l'une quelconque des revendications 1 à 11 quand le programme informatique est exécuté sur le dispositif.

**Fig. 1**

**Fig. 2**

**Fig. 3**

**Fig. 4**

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1252867 A
- DE 102007034005 A1
- DE 102005052838 A1
- DE 102006033794
- WO 2010010082 A1
- DE 102005042091 A1
- DE 10312848 A1
- DE 19923978 A1
- DE 10252298 B3

**In der Beschreibung aufgeführte Nicht-Patentliteratur**

- **S. DUARTE et al.** Composite Resin Restorations - Natural Asthetics and Dynamics of Light. *Pract. Proced. Aesthet. Dent.,* 2003, vol. 15 (9